# EUROPÄISCHE PATENTSCHRIFT

(11) **EP 3 240 730 B1**
(45) Veröffentlichungstag und Bekanntmachung des Hinweises auf die Patenterteilung: **03.04.2019**
(21) Anmeldenummer: 15794877.9
(22) Anmeldetag: 10.11.2015
(51) Int. Cl.: B65B 51/22, B29C 65/36, B29C 65/00, B65B 7/16

(54) **VORRICHTUNG UND VERFAHREN ZUM INDUKTIVEN ERWÄRMEN VON PACKUNGSMÄNTELN**
APPARATUS AND METHOD FOR INDUCTIVE HEATING OF PACKAGING SLEEVES
DISPOSITIF ET PROCÉDÉ POUR CHAUFFER PAR INDUCTION D'ENVELOPPES D'EMBALLAGE

(30) Priorität: 30.12.2014 DE 102014119700
(43) Veröffentlichungstag der Anmeldung: 08.11.2017
(73) Patentinhaber: SIG Technology AG, 8212 Neuhausen am Rheinfall (CH)
(72) Erfinder: BALTES, Klaus, 50127 Bergheim (DE); KIRCHNER, Patrick, 52066 Aachen (DE); MECKBACH, Andreas, 41812 Erkelenz Erkelenz (DE)
(74) Vertreter: Cohausz & Florack
(86) Internationale Anmeldenummer: PCT/EP2015/076116
(87) Internationale Veröffentlichungsnummer: WO 2016/107691

(56) Entgegenhaltungen:
- WO-A1-00/44619
- WO-A1-2012/019925
- WO-A2-2013/093505

## Beschreibung

Die Erfindung betrifft eine Vorrichtung zum induktiven Erwärmen von Packungsmänteln, umfassend: wenigstens eine Einheit zur Erzeugung eines Wechselstroms, wenigstens einen Induktor mit wenigstens einem Wirkabschnitt, und eine Halteeinheit mit einem vorderen Haltebereich und einem hinteren Haltebereich zur Lagerung des Induktors, wobei der Induktor mit der Einheit zur Erzeugung eines Wechselstroms verbunden ist, und wobei die Haltebereiche derart angeordnet sind, dass zwischen dem vorderen Haltebereich und dem hinteren Haltebereich ein Spalt entsteht, dessen Längsrichtung der Transportrichtung der Packungsmäntel entspricht.

Die Erfindung betrifft zudem ein Verfahren zum induktiven Erwärmen von Packungsmänteln.

Verpackungen können auf unterschiedliche Weisen und aus verschiedensten Materialien hergestellt werden. Eine weit verbreitete Möglichkeit ihrer Herstellung besteht darin, aus dem Verpackungsmaterial einen Zuschnitt herzustellen, aus dem durch Falten und weitere Schritte zunächst ein Packungsmantel und schließlich eine Verpackung entstehen. Diese Herstellungsart hat unter anderem den Vorteil, dass die Zuschnitte sehr flach sind und somit platzsparend gestapelt werden können. Auf diese Weise können die Zuschnitte bzw. Packungsmäntel an einem anderen Ort hergestellt werden als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff oder Metall, insbesondere Aluminium. Derartige Verpackungen finden insbesondere in der Lebensmittelindustrie große Verbreitung.

Auf dem Gebiet der Verpackungstechnik sind zahlreiche Vorrichtungen und Verfahren bekannt, mit denen flach zusammengefaltete Packungsmäntel aufgefaltet, einseitig verschlossen, mit Inhalten befüllt und anschließend vollständig verschlossen werden können.

Eine besondere Herausforderung stellt das Verschließen der Packungsmäntel dar, weil durch das Verschließen eine zuverlässige Abdichtung der Packungsmäntel erreicht werden muss, die auch dem anschließenden Transport und anderen Belastungen standhalten muss. Das Verschließen erfolgt oftmals in zwei Schritten: Zunächst wird der Packungsmantel in dem zu verschließenden Bereich erwärmt ("aktiviert"). Anschließend werden die gegenüberliegenden Seiten des Packungsmantels in dem zu verschließenden Bereich zusammengepresst ("verpresst"). Der Zusammenhalt zwischen den zusammengepressten Bereichen wird beispielsweise dadurch erreicht, dass eine innenliegende Kunststofflage vorgesehen ist, die bei der Erwärmung zähflüssig wird und somit bei der anschließenden Verpressung eine Verklebung bildet. Dieser Vorgang wird auch als "Versiegeln" bezeichnet.

Die Aktivierung - also Erwärmung - der Packungsmäntel kann beispielsweise durch Heißluft erfolgen. Dies hat den Vorteil, dass Packungsmäntel aus allen Materialien erhitzt werden können. Zudem ist ein Heißluftgebläse sehr robust. Nachteilig ist jedoch der sehr hohe Energiebedarf, durch den die Produktionskosten erheblich steigen.

Alternativ hierzu kann die Aktivierung bzw. Erwärmung der Packungsmäntel durch elektromagnetische Induktion erfolgen. Induktive Erwärmung bezeichnet ein Verfahren, bei dem elektrisch leitfähige Körper durch Wirbelstromverluste, die in den leitfähigen Körpern entstehen, erhitzt werden. Hierzu wird ein Wechselstrom durch einen Leiter (den Induktor) geleitet, wobei in der Umgebung des Leiters ein wechselndes Magnetfeld entsteht, welches auf den zu erhitzenden Körper einwirkt. Durch das wechselnde Magnetfeld entsteht in dem zu erhitzenden Körper ein Wirbelstrom und die Wirbelstromverluste führen zu einer Erwärmung des Körpers.

Eine Änderung der magnetischen Flussdichte führt also zu dem Entstehen eines elektrischen Feldes, welches wiederum zu einem Stromfluss führt.

Eine Voraussetzung zur Anwendung dieser Methode ist also, dass die Packungsmäntel elektrisch leitfähige Bereiche aufweisen. Viele Packungsmäntel weisen ohnehin eine Schicht aus Metall, insbesondere aus Aluminium auf, da hierdurch eine besonders gute Abschirmung der Packungsinhalte gegen Licht und Sauerstoff erreicht werden kann. Bei derartigen Packungsmänteln besteht daher die Möglichkeit, den Packungsmantel durch Induktion zu erhitzen. Ebenso könnte eine Schicht aus einem elektrisch leitfähigen Kunststoff induktiv erhitzt werden. Die Induktion bewirkt zwar zunächst nur eine Erwärmung der elektrisch leitenden Schicht; durch Wärmeleitung und eine entsprechende Anordnung der Schichten kann jedoch auch eine indirekte Erwärmung der für die Verklebung verantwortlichen, innenliegenden Kunststoffschicht erreicht werden. Ein Vorteil der induktiven Erwärmung liegt darin, dass die Wärme direkt in dem elektrisch leitfähigen Bereich entsteht und - anders als bei der Erwärmung durch Heißluft - nicht durch Wärmeleitung übertragen werden muss. Dies hat einen hohen Wirkungsgrad zur Folge, so dass der Energiebedarf und die Kosten gering gehalten werden können. Zudem ist die Menge der eingebrachten Wärmeleistung sehr präzise regelbar.

Eine Vorrichtung zum induktiven Versiegeln ist beispielsweise aus der WO 2014/166765 A1 bekannt.

Eine weitere Vorrichtung zum Versiegeln von Packungsmänteln ist aus der WO 00/44619 A1 bekannt. Bei dieser Vorrichtung werden die zu verschließenden Packungsmäntel in Kassetten geführt, die an einem Transportband befestigt sind. Die Kassetten sind derart gestaltet, dass die zu verschließenden Bereiche der Packungsmäntel an ihrer Oberseite und an ihrer Unterseite aus den Kassetten hinausragen. Die Unterseiten der Packungsmäntel werden zunächst durch eine Formstation mit zwei gegenüberliegend angeordneten Schienen geführt, durch welche die Unterseiten der Packungsmäntel zueinander gedrückt werden. Anschließend werden die Unterseiten der Packungsmäntel durch eine Siegelvorrichtung geführt, in der die Packungsmäntel induktiv erhitzt werden. Im Anschluss daran werden die Unterseiten der Packungsmäntel zunächst durch eine Druckvorrichtung und dann durch eine Stützvorrichtung geführt. Sowohl die Druckvorrichtung als auch die Stützvorrichtung umfassen gegenüberliegend angeordnete Rollen, zwischen denen die Unterseiten der Packungsmäntel zusammengedrückt werden.

Das induktive Erwärmen erfolgt nach der Lehre der WO 00/44619 A1, indem die Packungsmäntel mit ihren zu erwärmenden Bereichen durch einen Spalt der Siegelvorrichtung geführt werden. Auf beiden Seiten des Spaltes ist ein Induktor mit jeweils zwei parallelen Leitern angeordnet, so dass sich ein spiegelsymmetrischer Aufbau ergibt (vgl. Fig. 5 der WO 00/44619 A1). Neben jedem Leiter ist ein Kühlkanal angeordnet. Ein Nachteil dieser Lösung liegt in dem hohen konstruktiven Aufwand für mehrere Induktoren mit mehreren Leitern und den damit verbundenen Kosten. Die symmetrische Anordnung der Leiter kann zudem - je nach Richtung der Stromflüsse - zu weiteren Nachteilen führen: Bei entgegengesetzten Stromrichtungen auf beiden Seiten des Spaltes überlagern sich die elektromagnetischen Felder des rechten bzw. vorderen Induktors und des linken bzw. hinteren Induktors derart, dass sich das Magnetfeld im Bereich des Spaltes zwar verstärkt, dass jedoch die magnetischen Feldlinien im Bereich des Spaltes überwiegend in vertikaler Richtung und somit parallel zu den zu erwärmenden Flächen des Packungsmantels verlaufen. Zur Induktion von Wirbelströmen sind jedoch senkrecht zu diesen Flächen verlaufende Feldlinien erforderlich. Bei gleichen Stromrichtungen auf beiden Seiten des Spaltes würde sich das Magnetfeld im Bereich des Spaltes hingegen schwächen.

Vor diesem Hintergrund liegt der Erfindung die Aufgabe zugrunde, eine eingangs beschriebene und zuvor näher erläuterte Vorrichtung derart auszugestalten und weiterzubilden, dass auch bei einem konstruktiv einfachen Aufbau eine verbesserte Überlagerung der elektromagnetischen Felder und somit eine effizientere induktive Erwärmung erreicht wird.

Diese Aufgabe wird bei einer Vorrichtung nach dem Oberbegriff von Patentanspruch 1 dadurch erreicht, dass die Wirkabschnitte des wenigstens einen Induktors bezogen auf eine in dem Spalt liegende Mittelebene wenigstens abschnittsweise asymmetrisch zueinander angeordnet sind.

Eine erfindungsgemäße Vorrichtung dient dem Zweck, Packungsmäntel oder Teilbereiche davon induktiv zu erwärmen. Dabei kann es sich insbesondere um vereinzelte - also bereits voneinander getrennte - und vorgefaltete Packungsmäntel mit einer Schicht aus einem leitfähigen Material wie Aluminium handeln. Die Vorrichtung zeichnet sich zunächst durch wenigstens eine Einheit zur Erzeugung eines Wechselstroms aus. Induktive Erwärmung setzt eine Veränderung eines Magnetfeldes voraus, wozu ein Wechselstrom ideal ist. Die Vorrichtung - und insbesondere die Einheit zur Erzeugung eines Wechselstroms - umfasst zudem wenigstens einen Induktor mit wenigstens einem Wirkabschnitt. Vorzugsweise ist jedoch ein Induktor mit wenigstens zwei Wirkabschnitten vorhanden. Unter dem Wirkabschnitt wird derjenige Abschnitt des Induktors verstanden, der durch sein wechselndes elektromagnetisches Feld Wirbelströme in dem Packungsmantel erzeugen soll. Die Wirkabschnitte sind vorzugsweise etwa linear geformt und sehr dicht an den vorbeigeführten Packungsmänteln angeordnet. Vorzugsweise liegen die Wirkabschnitte an ihrer den Packungsmänteln zugewandten Seite frei oder weisen an dieser Seite nur eine sehr dünne Ummantelung auf (z.B. unter 1 mm), die das elektromagnetische Feld möglichst wenig abschirmt oder streut. Weiterhin umfasst die Vorrichtung eine Halteeinheit mit einem vorderen Haltebereich und einem hinteren Haltebereich zur Lagerung des Induktors. Die Halteeinheit kann einteilig oder mehrteilig ausgebildet sein und ihre Haltebereiche sind vorzugsweise länglich geformt, so dass ihre Ausdehnungen in Längsrichtung größer sind als ihre Ausdehnungen in Querrichtung und/oder in Hochrichtung. Die Lagerung des Induktors in bzw. an der Halteeinheit kann beispielsweise dadurch erfolgen, dass der Induktor jedenfalls teilweise von dem Material der Halteeinheit umschlossen ist. In einem einfachen Fall kann die Halteeinheit jedoch auch lediglich aus wenigstens einer Stromleitung oder einem Kabelrohr gebildet sein, an der der wenigstens eine Induktor befestigt, beispielsweise aufgehängt, ist. Der Induktor ist mit der Einheit zur Erzeugung eines Wechselstroms verbunden, worunter insbesondere eine elektrisch leitfähige Verbindung über Kabel, Leitungen oder dergleichen verstanden wird. Die Haltebereiche sind derart angeordnet, dass zwischen dem vorderen Haltebereich und dem hinteren Haltebereich ein Spalt entsteht, dessen Längsrichtung der Transportrichtung der Packungsmäntel entspricht. Diese Anordnung hat zur Folge, dass auch die Wirkabschnitte des Induktors beidseitig, also vor dem Packungsmantel und hinter dem Packungsmantel angeordnet werden können. Dies dient dem Zweck, dass die Packungsmäntel mit ihrem zu erwärmenden Bereich durch den Spalt geführt werden können, ohne angehalten werden zu müssen.

Erfindungsgemäß wird vorgeschlagen, dass die Wirkabschnitte des wenigstens einen Induktors bezogen auf eine in dem Spalt liegende Mittelebene wenigstens abschnittsweise asymmetrisch zueinander angeordnet sind. Unter der Mittelebene wird insbesondere eine Ebene verstanden, die in Transportrichtung durch den Spalt verläuft und - jedenfalls bei quaderförmigen Verpackungen - mittig zwischen der vorderen Fläche und der hinteren Fläche des Packungsmantels liegt und parallel zu diesen beiden Flächen angeordnet ist. Die Mittelebene verläuft vorzugsweise senkrecht. In Bezug auf diese Mittelebene sollen die Wirkabschnitte des Induktors wenigstens abschnittsweise oder sogar durchgehend asymmetrisch angeordnet sein. Dabei ist es von besonderem Vorteil, wenn die Wirkabschnitte des wenigstens einen Induktors beidseitig der Mittelebene und derart angeordnet sind, dass wenigstens ein Teil der von ihnen erzeugten elektromagnetischen Feldlinien in Wechselwirkung miteinander treten. Damit lässt sich unter anderem die Gleichmäßigkeit der im Verpackungsmaterial zu erzeugenden Aktivierung erhöhen. So genannte "hot spots" werden also besonders wirksam vermieden. Insbesondere soll der Wirkabschnitt bzw. die Wirkabschnitte auf der einen Seite des Spaltes nicht spiegelsymmetrisch zu dem Wirkabschnitt bzw. den Wirkabschnitten auf der anderen Seite des Spaltes angeordnet sein. Überraschend hat sich bei Versuchen gezeigt, dass eine asymmetrische Anordnung der Wirkabschnitte des Induktors eine erhebliche Erhöhung der erreichbaren Temperaturen bei ansonsten gleichen Betriebsparametern zur Folge hat. Dies wird darauf zurückgeführt, dass sich die beidseitig des Spaltes erzeugten elektromagnetischen Felder bei asymmetrischer Anordnung in einer für die induktive Erwärmung günstigeren Weise überlagern. Besonders groß ist dieser Vorteil, wenn nur ein einziger Induktor vorhanden ist, der auf der einen Seite des Spaltes in Transportrichtung verläuft, den Spalt dann überbrückt und schließlich auf der anderen Seite des Spaltes entgegen der Transportrichtung zurückläuft. In diesem Fall weisen die Stromrichtungen auf beiden Seiten des Spaltes gegenläufige Richtungen auf, was Auswirkungen auf die "Richtungen" der Feldlinien hat: Die Feldlinien des rechten bzw. vorderen Wirkabschnitts und des linken bzw. hinteren Wirkabschnitts würden sich bei symmetrischer Anordnung derart überlagern, dass sich das Magnetfeld im Bereich des Spaltes zwar verstärkt, dass jedoch die Feldlinien im Bereich des Spaltes überwiegend in vertikaler Richtung und somit parallel zu den zu erwärmenden Flächen des Packungsmantels verlaufen. Zur Induktion von Wirbelströmen sind jedoch senkrecht zu diesen Flächen verlaufende Feldlinien erforderlich, also Feldlinien, die die zu erwärmenden Flächen "durchstoßen". Gerade diese - zur Erwärmung notwendigen - Feldlinien würden sich bei einer symmetrischen Anordnung gegenseitig weitgehend eliminieren. Bei einer erfindungsgemäßen Anordnung der Induktoren verlaufen die Feldlinien im Bereich des Spaltes hingegen schräg; die Feldlinien enthalten daher auch Richtungskomponenten, die senkrecht zu den zu erwärmenden Flächen des Packungsmantels verlaufen. Durch eine erfindungsgemäße Anordnung der Wirkabschnitte des Induktors kann daher auf konstruktiv einfache Weise eine wesentlich effizientere Erwärmung der Packungsmäntel erreicht werden. Die asymmetrische Anordnung kann beispielsweise durch einen Höhenversatz zwischen den gegenüberliegenden Wirkabschnitten des Induktors erreicht werden.

Nach einer Ausgestaltung der Vorrichtung ist vorgesehen, dass dem vorderen Haltebereich und dem hinteren Haltebereich jeweils wenigstens ein Wirkabschnitt des Induktors zugeordnet ist. Indem jedem Haltebereich wenigstens ein Wirkabschnitt zugeordnet wird, ist sichergestellt, dass auf jeder Seite des Spaltes ein Wirkabschnitt und somit ein elektromagnetisches Feld vorhanden ist. Ein Wirkabschnitt pro Haltebereich ist bei ausreichender Länge ausreichend um eine zuverlässige Erwärmung des Packungsmantels zu erreichen; gleichwohl können mehrere Wirkabschnitte pro Haltebereich vorgesehen sein. Vorzugsweise handelt es sich bei den Wirkabschnitten um Wirkabschnitte desselben Induktors.

Diese Ausgestaltung kann auf vorteilhafte Weise weitergebildet werden durch einen Höhenversatz, der zwischen dem vorderen Wirkabschnitt und dem hinteren Wirkabschnitt des Induktors vorgesehen ist. Durch einen Höhenversatz, also eine unterschiedlich hohe Anordnung, kann auf konstruktiv einfache Weise ein asymmetrischer Aufbau erreicht werden. Ein Höhenversatz kann beispielsweise dadurch erreicht werden, dass der vordere Haltebereich und der hintere Haltebereich der Halteeinheit unterschiedlich hoch angeordnet werden. Auch bei gleich hoher Anordnung beider Haltebereiche kann ein Höhenversatz erreicht werden, indem die beiden Wirkabschnitte des Induktors unterschiedlich hoch in bzw. an dem Haltebereich gelagert sind. Ebenso kann ein Höhenversatz durch unterschiedliche Formen, insbesondere durch unterschiedliche Querschnittsflächen der Wirkabschnitte erreicht werden.

Zu dieser Ausgestaltung wird weiter vorgeschlagen, dass der Höhenversatz im Bereich zwischen 0,5 mm bis 10 mm, insbesondere im Bereich zwischen 2 mm bis 4 mm liegt. Ein Versatz in dem angegebenen Bereich berücksichtigt sowohl eine möglichst große Veränderung der elektromagnetischen Felder (möglichst großer Höhenversatz) als auch eine begrenzte Höhe der zu erwärmenden Flächen (möglichst kleiner Höhenversatz).

In weiterer Ausbildung der Vorrichtung ist vorgesehen, dass die Wirkabschnitte des Induktors linear ausgebildet sind und parallel zur Transportrichtung der Packungsmäntel verlaufen. Diese Gestaltung und Anordnung der Wirkabschnitte ermöglicht eine besonders dichte Anordnung der Wirkabschnitte an den zu erwärmenden Packungsmänteln, da die zu erwärmenden Flächen der Packungsmäntel ebenfalls weitgehend eben ausgebildet sind und entlang der Transportrichtung geführt werden. Durch einen geringen Abstand zwischen den Wirkabschnitten des Induktors und den Packungsmänteln wird eine besonders effiziente induktive Erwärmung erreicht, da die Feldstärke mit zunehmender Entfernung abnimmt.

Nach einer weiteren Ausgestaltung der Vorrichtung wird vorgeschlagen, dass wenigstens ein Induktor eine Brücke zur Überbrückung des Spaltes aufweist. Durch eine Brücke ist es möglich, dass sich ein Induktor über beide Seiten des Spaltes erstreckt, ohne dabei ein Hindernis für die durch den Spalt geführten Packungsmäntel darzustellen. Beispielsweise kann ein Induktor mit zwei Wirkabschnitten vorgesehen sein, von denen ein Wirkabschnitt auf der vorderen Seite des Spaltes und der andere Wirkabschnitt auf der hinteren Seite des Spaltes angeordnet ist. Die Brücke ist vorzugsweise aus einem Material mit einer guten elektrischen Leitfähigkeit wie Kupfer, Messing, Silber, Beryllium oder dergleichen hergestellt. Bei diesem Material kann es sich um dasselbe Material wie das Material der Wirkabschnitte des Induktors handeln; dies vereinfacht die Verbindung, insbesondere Verlötung und vermeidet Probleme wie Kontaktkorrosion. Sofern mehrere Induktoren vorgesehen sind, können auch mehrere Brücken vorgesehen sein.

Gemäß einer weiteren Ausbildung der Vorrichtung wird vorgeschlagen, dass wenigstens ein Wirkabschnitt des Induktors als Hohlprofil mit einem integrierten Kühlkanal ausgebildet ist. Vorzugsweise sind alle Wirkabschnitte des Induktors als Hohlprofile mit integrierten Kühlkanälen ausgebildet. Bei dem Hohlprofil kann es sich beispielsweise um ein rechteckiges, insbesondere quadratisches Vierkantprofil oder auch um ein Hohlprofil mit kreisförmigem Querschnitt handelt. Diese Gestaltung der Wirkabschnitte hat den besonderen Vorteil, dass keine separaten Kühlkanäle neben den Wirkabschnitten vorgesehen werden müssen. Stattdessen wird der ohnehin vorhandene Hohlraum des Hohlprofils zur Wärmeabfuhr genutzt. Die Wärmeabfuhr kann durch Luft oder - zur Erreichung höherer Kühlleistungen - durch Flüssigkeiten wie Wasser oder Öl geleistet werden. Ein weiterer Vorteil dieser Gestaltung liegt darin, dass die äußeren Abmessungen der Wirkabschnitte des Induktors gegenüber einer massiven Ausführung kaum oder überhaupt nicht vergrößert werden müssen. Dies liegt daran, dass bei Leitern, die von Wechselströmen durchflossen werden die höchste Stromdichte ohnehin in den äußeren Querschnittsbereichen der Leiter anzutreffen ist, während die mittleren Querschnittsbereiche keinen großen Beitrag zum Stromfluss leisten (sog. "Skin-Effekt").

Eine weitere Ausgestaltung der Vorrichtung sieht vor, dass wenigstens ein Wirkabschnitt des Induktors von einem Konzentrator umgeben ist. Vorzugsweise sind alle Wirkabschnitte des Induktors von Konzentratoren umgeben. Bevorzugt ist der Wirkabschnitt nur teilweise von dem Konzentrator umgeben. Unter einem Konzentrator wird ein Mittel zur Konzentration des Magnetfeldes verstanden. Vorzugsweise ist der Konzentrator aus einem magneto-dielektrischen Material hergestellt, also aus einem Material, das sowohl ferromagnetische als auch dielektrische Eigenschaften aufweist. Hierbei kann es sich beispielsweise um einen thermoplastischen Kunststoff handeln, in den gleichmäßig Weicheisenpartikel eingebettet sind. Der Einsatz von Konzentratoren hat den Vorteil, dass das Magnetfeld gezielt auf den gewünschten Bereich, also die zu erwärmenden Flächen des Packungsmantels konzentriert werden kann. Dies führt einerseits zu einer sehr effizienten und präzisen induktiven Erwärmung und andererseits zu einer Vermeidung von starken Magnetfeldern in der Umgebung. Ein weiterer Vorteil liegt in einer höheren Eindringtiefe der Magnetfelder in den Packungsmantel. Dies ist insbesondere im Bereich von höheren Materialstärken wichtig, um auch dort eine ausreichende Erwärmung sicherzustellen (z.B. eine Materialüberlappung im Bereich einer Nahtstelle des Packungsmantels).

Nach einer weiteren Ausbildung der Vorrichtung ist vorgesehen, dass wenigstens ein Wirkabschnitt des Induktors einen Vorsprung aufweist. Vorzugsweise weisen alle Wirkabschnitte des Induktors einen Vorsprung auf. Durch einen Vorsprung kann der Stromfluss und somit auch das elektromagnetische Feld besonders dicht und präzise an die zu erwärmenden Stellen des Packungsmantels herangeführt und somit konzentriert werden. Dies kann beispielsweise dazu genutzt werden, die zu erwärmenden Flächen des Packungsmantels zu verkleinern, um die Packstoffausbeute zu erhöhen. Dieser Effekt kann insbesondere durch den Einsatz eines zuvor beschriebenen und entsprechend geformten Konzentrators verstärkt werden. Die Lage und die Form des Vorsprungs können im Verlauf der Länge des Wirkabschnitts des Induktors konstant sein oder variieren.

Eine weitere Ausgestaltung der Vorrichtung sieht vor, dass wenigstens ein Haltebereich gegenüber der Mittelebene um einen Winkel im Bereich zwischen 5° bis 30°, insbesondere zwischen 10° bis 25° geneigt ist. Auch durch eine Neigung der Haltebereiche kann eine asymmetrische Anordnung der Wirkabschnitte des Induktors erreicht werden, sofern nicht beide Haltebereiche gleich weit geneigt werden. Ein Vorteil der Neigung der Haltebereiche liegt darin, dass die zu erwärmenden Flächen der Packungsmäntel in diesem Stadium typischerweise ebenfalls nicht vertikal verlaufen, sondern leicht geneigt sind. Die Neigung der Haltebereiche erlaubt daher eine Anpassung der Lage der Wirkabschnitte des Induktors an die Form und Lager der zu erwärmenden Flächen der Packungsmäntel. Zudem kann durch eine unterschiedliche Neigung der Haltebereiche eine Anpassung an unterschiedliche Materialstärken der Packungsmäntel erreicht werden. Die Ursache unterschiedlicher Materialstärken kann beispielsweise darin liegen, dass die Packungsmäntel auf einer Seite eine Nahtstelle mit einer Materialüberlappung aufweisen während die andere Seite keine derartigen Unregelmäßigkeiten aufweist.

Eine weitere Ausbildung der Vorrichtung ist gekennzeichnet durch wenigstens zwei Induktoren, wobei jeder Induktor mit einer Einheit zur Erzeugung eines Wechselstroms verbunden ist. Indem mehrere separate Induktoren und somit getrennte Stromkreise vorhanden sind, besteht die Möglichkeit einer individuellen Einstellung der Betriebsparameter für jeden der Induktoren (Spannung, Frequenz, etc.). Alternativ hierzu kann jedoch auch bei mehreren Induktoren vorgesehen sein, dass alle Induktoren an derselben Einheit zur Erzeugung eines Wechselstroms angeschlossen sind und daher mit gleichen Betriebsparametern betrieben werden.

Der Induktor kann aus einem elektrischen Leiter wie Kupfer, Messing oder Beryllium hergestellt sein. Sofern mehrere Induktoren vorhanden sind, sind vorzugsweise alle Induktoren aus Kupfer, Messing oder Beryllium hergestellt. Kupfer und Messing zeichnen sich durch eine gute elektrische Leitfähigkeit aus. Sie lassen sich zudem gut umformen. Bei besonders hohen Anforderungen an die elektrische Leitfähigkeit kann trotz des hohen Preises auch Silber als Material eingesetzt werden.

Die Vorrichtung kann ergänzt werden durch ein Transportband mit Zellen zur Aufnahme der Packungsmäntel. Durch ein Transportband bzw. einen Transportriemen können hohe Zugkräfte übertragen werden, die es erlauben, eine Vielzahl von Packungsmänteln in konstanten Abständen zueinander zu transportieren. Die Zellen dienen der Aufnahme der Packungsmäntel. Die Packungsmäntel können sowohl durch eine formschlüssige Verbindung als auch durch eine kraftschlüssige Verbindung in den Zellen gehalten werden. Es kann vorgesehen sein, dass das Transportband für einen kontinuierlichen Transport der Packungsmäntel eingerichtet ist. Dies hat den Vorteil einer unterbrechungsfreien und gleichmäßigen Bewegung der Packungsmäntel. Alternativ hierzu kann das Transportband für einen diskontinuierlichen Transport der Packungsmäntel eingerichtet sein. Dies hat den Vorteil, dass einige Bearbeitungsschritte bei stillstehenden Packungsmänteln einfacher durchgeführt werden können.

Alternativ oder zusätzlich kann die Vorrichtung ergänzt werden durch eine Führungseinrichtung zur Konditionierung der Giebelgeometrie der Packungsmäntel. Die Führungseinrichtung kann in Transportrichtung vor und/oder hinter den Haltebereichen angeordnet sein. Eine Anordnung vor den Haltebereichen dient der Konditionierung der Giebelgeometrie, um eine Verbesserung der Wiederholgenauigkeit des Aktivierungsprozesses zu erzielen. Eine Anordnung hinter den Haltebereichen dient hingegen der Vorbereitung auf nachfolgende Prozesse sowie der Verringerung der Kontaminierungsgefahr durch die Verkleinerung des offenen Giebelbereichs. Um für den der Aktivierung nachfolgenden Bearbeitungsschritt - die Verpressung - definierte Prozessparameter bereitstellen zu können, soll eine Führungseinrichtung vorgesehen sein, mit der ein definierter Abstand der zu verbindenden Siegelflächen des Packungsgiebels eingestellt werden kann. Die Größe dieses Abstands kann beispielsweise dem Abstand zwischen den beiden Siegelflächen beim Verlassen des Spaltes zwischen den Haltebereichen der Vorrichtung entsprechen. Es kann aber auch erwünscht sein, dass dieser Abstand sich während des Durchlaufens der Führungseinrichtung etwas vergrößert oder verkleinert. Im letzten Fall ist es vorteilhaft, dass die miteinander zu verbindenden Innenflächen bereits näher aneinander gebracht werden. Um ein zu frühes und unbeabsichtigtes Aneinanderhaften zu verhindern kann es, je nachdem wie groß zuvor der Spaltabstand war, jedoch auch sinnvoll sein, zunächst eine leichte Entfernung der miteinander zu verbindenden Flächen zuzulassen. Dabei ist davon auszugehen, dass die zu verbindenden Flächen aufgrund der durch die vorhergehenden Falt- und Siegelprozesse in die noch offene Packung eingebrachten Spannungen das Bestreben haben, sich voneinander zu entfernen, um sich entspannen zu können. Es ist wichtig, dass die jeweilige Kontaktfläche groß genug ist und keine scharfen Kanten aufweist. Von Vorteil ist ferner, wenn die mit der Packungsaußenseite in Kontakt tretenden Führungsflächen eine Antihaft- und/oder eine Gleitbeschichtung, bspw. aus PFA (Perfluoralkoxy-Polymere) oder PTFE (Polytetrafluorethylen), aufweisen. Dies verhindert auch mögliche Ablagerungen an den Führungsflächen, falls es dennoch zu vereinzeltem Abrieb oder Abtrag von Packungsmaterial kommen sollte, was für die Behandlung nachfolgender Packungen wichtig ist. Die Länge der Führungseinrichtung in Bewegungsrichtung der Packungen sollte je nach vorliegenden Prozessparametern, wie Material der Packung, Produktionsgeschwindigkeit, Abstand der Siegelflächen zu einander, Aktivierungstemperatur, Umgebungstemperatur u.a., zwischen dem 0,2- bis 2,5- fachen der Seitenlänge der durch die Vorrichtung zu behandelnden Packung betragen. Dies ermöglicht bereits eine sich auf die Qualität der späteren Siegelnaht positiv auswirkende Reifung der aktivierten und mit einender zu verbindenden Siegelflächen bzw. der sie bildenden Materialschichten.

Die eingangs beschriebene Aufgabe wird auch gelöst durch ein Verfahren zum induktiven Erwärmen von Packungsmänteln. Das Verfahren umfasst die folgenden Schritte: a) Bereitstellen einer Vorrichtung zum induktiven Erwärmen von Packungsmänteln mit wenigstens einem Induktor mit wenigstens einem Wirkabschnitt; b) Bereitstellen von Packungsmänteln mit einem elektrisch leitfähigen Bereich; und c) Erzeugen eines elektromagnetischen Wechselfeldes. Das Verfahren ist dadurch gekennzeichnet, dass das elektromagnetische Wechselfeld durch Wirkabschnitte des Induktors erzeugt wird, die bezogen auf eine in dem Spalt liegende Mittelebene asymmetrisch zueinander angeordnet sind.

Wie bereits zuvor im Zusammenhang mit der Vorrichtung beschrieben wurde, liegt auch dem Verfahren die Idee zugrunde, die elektromagnetischen Felder der Wirkabschnitte des Induktors in einer für die induktive Erwärmung idealen Weise zu überlagern. Dies kann erreicht werden, indem die Wirkabschnitte in Bezug auf die Mitteleebene asymmetrisch, also nicht spiegelsymmetrisch angeordnet werden.

Eine Ausgestaltung des Verfahrens sieht vor, dass in Schritt a) eine Vorrichtung nach einem der Ansprüche 1 bis 13 bereitgestellt wird. Die zuvor beschriebene Vorrichtung eignet sich in allen dargestellten Ausgestaltungen in besonderer Weise zur Durchführung des Verfahrens, da die asymmetrische Anordnung der Wirkabschnitte der Induktoren einen konstruktiv einfachen Weg darstellt, eine möglichst günstige Überlagerung der elektromagnetischen Felder der Wirkabschnitte zu erreichen.

In weiterer Ausbildung des Verfahrens wird vorgeschlagen, dass zur Erzeugung des elektromagnetischen Wechselfeldes eine Gleichspannung mit einer Spannung im Bereich zwischen 20 V und 1000 V, insbesondere zwischen 120 V und 280 V eingesetzt wird. Mit Gleichspannungen in den angegebenen Bereichen wurden besonders gute Ergebnisse beim induktiven Erwärmen von Packungsmänteln mit einer dünnen Aluminiumschicht erzielt.

Nach einer weiteren Ausgestaltung des Verfahrens ist vorgesehen, dass ein elektromagnetisches Wechselfeld mit einer Frequenz im Bereich zwischen 30 kHz und 2000 kHz, insbesondere zwischen 100 kHz und 500 kHz, bevorzugt zwischen 100 kHz und 250 kHz erzeugt wird. Mit Frequenzen in den angegebenen Bereichen wurden besonders gute Ergebnisse beim induktiven Erwärmen von Packungsmänteln mit einer dünnen Aluminiumschicht erzielt. Die Gleichspannung kann an einem Schwingkreis aus wenigstens einem Kondensator und wenigstens einem Induktor anliegen.

Schließlich kann das Verfahren ergänzt werden durch den folgenden Schritt: d) Bewegen der Packungsmäntel relativ zu der Vorrichtung. Insbesondere kann vorgesehen sein, die Packungsmäntel durch den Spalt der feststehenden Vorrichtung zu bewegen. Dieser Schritt hat den Vorteil, dass die Packungsmäntel während der induktiven Erwärmung nicht angehalten werden brauchen. Es ist also auch während der Erwärmung eine kontinuierliche, unterbrechungsfreie Förderung der Packungsmäntel möglich. Die Bewegung der Packungsmäntel hat nur einen sehr geringen Einfluss auf die elektromagnetischen Felder der Vorrichtung, da der Betrag der Relativgeschwindigkeit zwischen den Packungsmänteln und der Vorrichtung im Vergleich zu den hochfrequenten Änderungen der elektromagnetischen Felder vernachlässigbar klein ist.

Die Erfindung wird nachfolgend anhand einer lediglich ein bevorzugtes Ausführungsbeispiel darstellenden Zeichnung näher erläutert. In der Zeichnung zeigen:
- Fig. 1A:: einen aus dem Stand der Technik bekannten Zuschnitt zum Falten eines Packungsmantels,
- Fig. 1B:: einen aus dem Stand der Technik bekannten Packungsmantel, der aus dem in Fig. 1A gezeigten Zuschnitt gebildet ist, im flach gefalteten Zustand,
- Fig. 1C:: den Packungsmantel aus Fig. 1B im aufgefalteten Zustand,

- Fig. 1D:: den Packungsmantel aus Fig. 1C mit vorgefalteten Boden- und Giebelflächen,
- Fig. 2A:: eine erste Ausgestaltung einer erfindungsgemäßen Vorrichtung in einer Vorderansicht,
- Fig. 2B:: die Vorrichtung aus Fig. 2A in einer Draufsicht,
- Fig. 2C:: die Vorrichtung aus Fig. 2A in einer geschnittenen Ansicht entlang der Ebene IIC-IIC aus Fig. 2A,
- Fig. 2D:: eine alternative Ausgestaltung zu Fig. 2C,
- Fig. 2E:: eine weitere alternative Ausgestaltung zu Fig. 2C,
- Fig. 3A:: eine zweite Ausgestaltung einer erfindungsgemäßen Vorrichtung in einer Vorderansicht,
- Fig. 3B:: die Vorrichtung aus Fig. 3A in einer Draufsicht,
- Fig. 3C:: die Vorrichtung aus Fig. 3A in einer geschnittenen Ansicht entlang der Ebene IIIC-IIIC aus Fig. 3A,
- Fig. 3D:: die Vorrichtung aus Fig. 3A in einer geschnittenen Ansicht entlang der Ebene IIID-IIID aus Fig. 3A,
- Fig. 3E:: eine alternative Ausgestaltung zu Fig. 3C,
- Fig. 3F:: eine alternative Ausgestaltung zu Fig. 3D,
- Fig. 4A:: eine dritte Ausgestaltung einer erfindungsgemäßen Vorrichtung in einer Vorderansicht,
- Fig. 4B:: die Vorrichtung aus Fig. 4A in einer Draufsicht,
- Fig. 4C:: die Vorrichtung aus Fig. 4A in einer geschnittenen Ansicht entlang der Ebene IVC-IVC aus Fig. 4A,
- Fig. 5A:: eine vierte Ausgestaltung einer erfindungsgemäßen Vorrichtung in einer Vorderansicht,
- Fig. 5B:: die Vorrichtung aus Fig. 5A in einer Draufsicht, und
- Fig. 5C:: die Vorrichtung aus Fig. 5A in einer geschnittenen Ansicht entlang der Ebene VC-VC aus Fig. 5A.

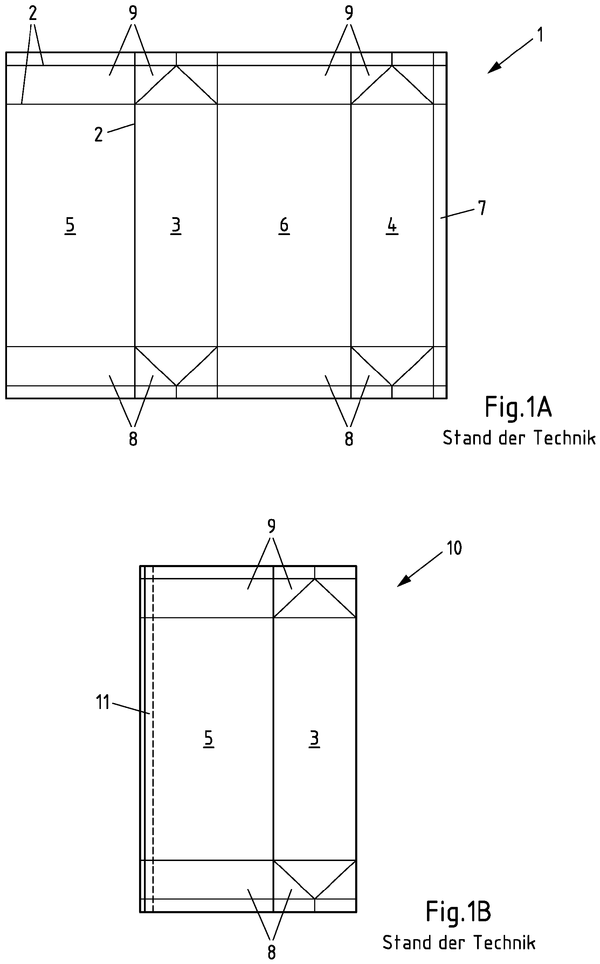

In Fig. 1A ist ein aus dem Stand der Technik bekannter Zuschnitt 1 dargestellt, aus dem ein Packungsmantel gebildet werden kann. Der Zuschnitt 1 kann mehrere Lagen unterschiedlicher Materialien umfassen, beispielsweise Papier, Pappe, Kunststoff oder Metall, insbesondere Aluminium. Der Zuschnitt 1 weist mehrere Faltlinien 2 auf, die das Falten des Zuschnitts 1 erleichtern sollen und den Zuschnitt 1 in mehrere Flächen aufteilen. Der Zuschnitt 1 kann in eine erste Seitenfläche 3, eine zweite Seitenfläche 4, eine vordere Fläche 5, eine hintere Fläche 6, eine Siegelfläche 7, Bodenflächen 8 und Giebelflächen 9 unterteilt werden. Aus dem Zuschnitt 1 kann ein Packungsmantel gebildet werden, indem der Zuschnitt 1 derart gefaltet wird, dass die Siegelfläche 7 mit der vorderen Fläche 5 verbunden, insbesondere verschweißt 5 werden kann.

Fig. 1B zeigt einen aus dem Stand der Technik bekannten Packungsmantel 10 im flach gefalteten Zustand. Die bereits im Zusammenhang mit Fig. 1A beschriebenen Bereiche des Packungsmantels sind in Fig. 1B mit entsprechenden Bezugszeichen versehen. Der Packungsmantel 10 ist aus dem in Fig. 1A gezeigten Zuschnitt 1 gebildet. Hierzu wurde der Zuschnitt 1 derart gefaltet, dass die Siegelfläche 7 und die vordere Fläche 5 überlappend angeordnet sind, so dass die beiden Flächen miteinander flächig verschweißt werden können. Als Ergebnis entsteht eine Längsnaht 11. In Fig. 1B ist der Packungsmantel 10 in einem flach zusammengefalteten Zustand dargestellt. In diesem Zustand liegt eine Seitenfläche 4 (in Fig. 1B verdeckt) unter der vorderen Fläche 5 während die andere Seitenfläche 3 auf der hinteren Fläche 6 (in Fig. 1B verdeckt) liegt. In dem flach zusammengefalteten Zustand können mehrere Packungsmäntel 10 besonders platzsparend gestapelt werden. Daher werden die Packungsmäntel 10 häufig an dem Ort der Herstellung gestapelt und stapelweise zu dem Ort der Befüllung transportiert. Erst dort werden die Packungsmäntel 10 abgestapelt und aufgefaltet, um mit Inhalten, beispielsweise mit Nahrungsmitteln, befüllt werden zu können.

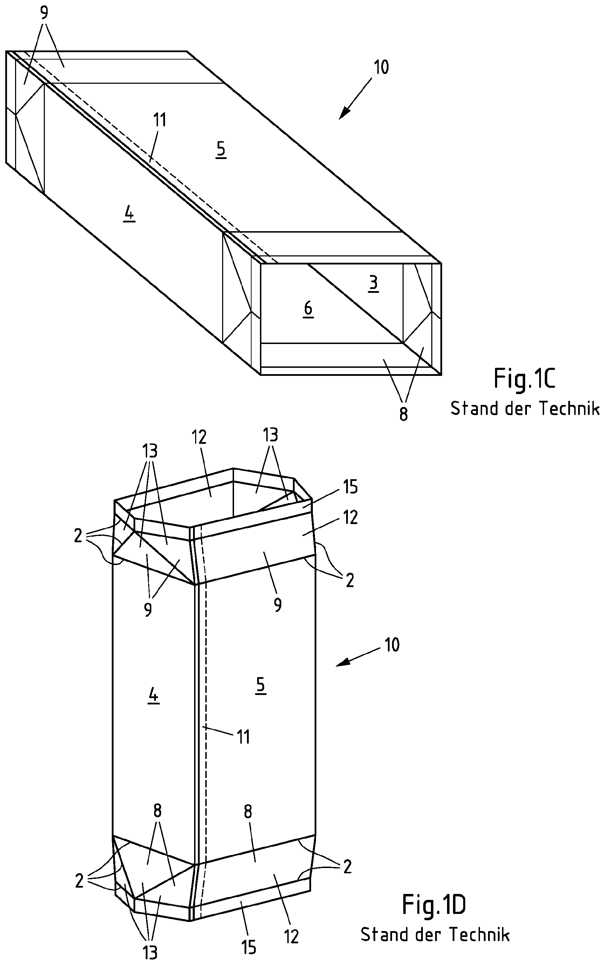

In Fig. 1C ist der Packungsmantel 10 aus Fig. 1B im aufgefalteten Zustand dargestellt. Auch hier sind die bereits im Zusammenhang mit Fig. 1A oder Fig. 1B beschriebenen Bereiche des Packungsmantels 10 mit entsprechenden Bezugszeichen versehen. Unter dem aufgefalteten Zustand wird eine Konfiguration verstanden, bei der sich zwischen den beiden jeweils benachbarten Flächen 3, 4, 5, 6 ein Winkel von etwa 90° ausbildet, so dass der Packungsmantel 10 - je nach der Form dieser Flächen - einen quadratischen oder rechteckigen Querschnitt aufweist. Dem entsprechend sind die gegenüberliegenden Seitenflächen 3, 4 parallel zueinander angeordnet. Das Gleiche gilt für die vordere Fläche 5 und die hintere Fläche 6. Alternativ zu einem quadratischen oder rechteckigen Querschnitt können aus entsprechend angepassten Zuschnitten mit entsprechend angepassten Faltvorgängen auch (nicht dargestellte) Packungsmäntel mit 3-eckigem, 6-eckigem, 8-eckigem, rundem oder ovalem Querschnitt erzeugt werden.

Fig. 1D zeigt den Packungsmantel 10 aus Fig. 1C im vorgefalteten Zustand, also in einem Zustand, in dem die Faltlinien 2 sowohl im Bereich der 5 Bodenflächen 8 als auch im Bereich der Giebelflächen 9 vorgefaltet worden sind. Diejenigen Bereiche der Bodenflächen 8 und der Giebelflächen 9, die an die vordere Fläche 5 und an die hintere Fläche 6 angrenzen, werden auch als Rechtecksflächen 12 bezeichnet. Die Rechtecksflächen 12 werden bei der Vorfaltung nach innen gefaltet und bilden später den Boden bzw. den Giebel der Verpackung. Diejenigen Bereiche der Bodenflächen 8 und der Giebelflächen 9, die an die Seitenflächen 3, 4 angrenzen, werden hingegen als Dreiecksflächen 13 bezeichnet. Die Dreiecksflächen 13 werden bei der Vorfaltung nach außen gefaltet und bilden abstehende Bereiche aus überschüssigem Material, die auch als "Ohren" 14 bezeichnet werden und in einem späteren Herstellungsschritt - etwa durch Kleb- oder Schweißverfahren - an die Verpackung angelegt werden. Die oberen Bereiche der Giebelflächen 9 sowie die unteren Bereiche der Bodenflächen 8 bilden nach dem Erhitzen und dem Zusammenpressen Flossennähte 15; insbesondere diese Bereiche sollen daher durch die hier beschriebene Vorrichtung sowie durch das hier beschriebene Verfahren induktiv erwärmt werden.

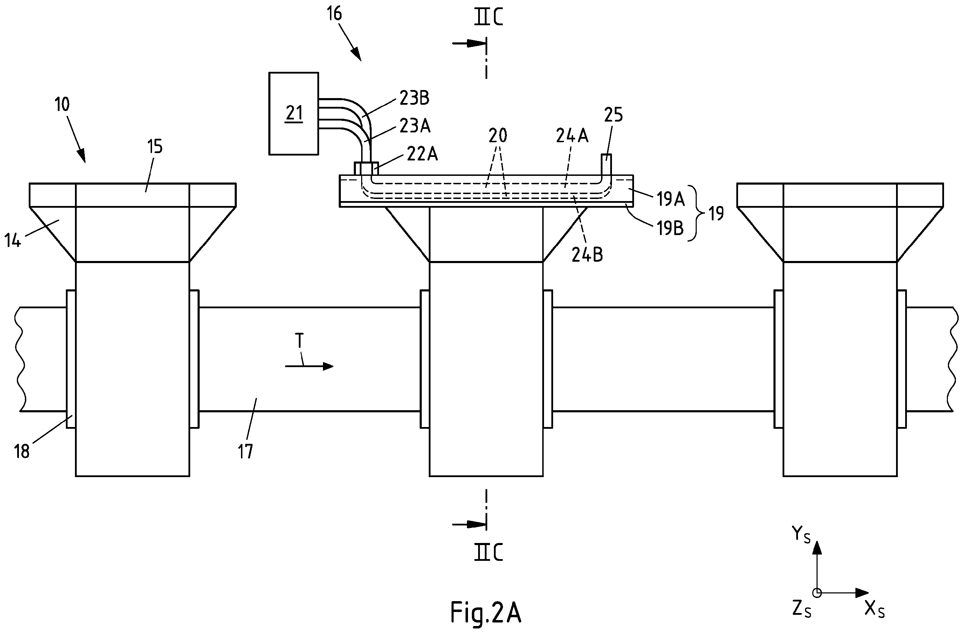

Fig. 2A zeigt eine erste Ausgestaltung einer erfindungsgemäßen Vorrichtung 16 in einer Vorderansicht. Dargestellt ist zudem ein Transportband 17 mit Zellen 18, in denen die Packungsmäntel 10 zunächst zu der Vorrichtung 16 geführt werden und nach dem induktiven Erhitzen weiter transportiert werden. Die Transportrichtung T der Packungsmäntel 10 verläuft daher parallel zum Transportband 17. Die Vorrichtung 16 umfasst eine Halteeinheit 19 mit zwei Haltebereichen 19A, 19B sowie einen Induktor 20, der durch beide Haltebereiche 19A, 19B verläuft. Die Haltebereiche 19A, 19B dienen der Lagerung des Induktors 20 und bestimmen somit dessen Position. Die Vorrichtung 16 umfasst zudem eine Einheit 21 zur Erzeugung einer Wechselspannung. Der Induktor 20 ist über Anschlusselemente 22A, 22B und Kabel 23A, 23B mit der Einheit 21 verbunden. Die Haltebereiche 19A, 19B sind derart angeordnet, dass zwischen den Haltebereichen 19A, 19B ein Spalt S entsteht, dessen Längsrichtung Xs der Transportrichtung T der Packungsmäntel 10 entspricht. Der Spalt S weist zudem eine Hochrichtung Ys und eine Querrichtung Zs auf, die senkrecht zueinander und senkrecht zu der Längsrichtung Xs des Spaltes S verlaufen (siehe Koordinatensystem in Fig. 2A). Der Induktor 20 weist zwei Wirkabschnitte 24A, 24B auf, die etwa linear verlaufen und deren Längsrichtungen ebenfalls der Transportrichtung T der Packungsmäntel 10 entsprechen. Der vordere Wirkabschnitt 24A ist dem vorderen Haltebereich 19A zugeordnet und der hintere Wirkabschnitt 24B ist dem hinteren Haltebereich 19B zugeordnet. Die beiden Wirkabschnitte 24A, 24B des Induktors 20 werden durch eine U-förmige Brücke 25 miteinander verbunden.

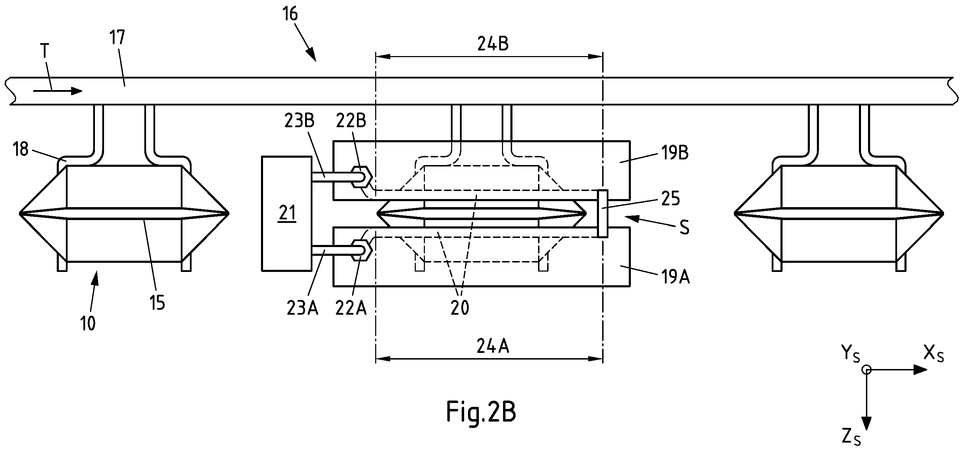

In Fig. 2B ist die Vorrichtung aus Fig. 2A in einer Draufsicht dargestellt. Für diejenigen Bereiche der Vorrichtung 16, die bereits im Zusammenhang mit Fig. 2A beschrieben wurden, werden auch in Fig. 2B entsprechende Bezugszeichen verwendet. In der Draufsicht sind insbesondere der Verlauf des Spaltes S sowie der Anschluss des Induktors 20 über die Anschlusselemente 22A, 22B und die Kabel 23A, 23B an die Einheit 21 erkennbar. Zudem ist erkennbar, dass sich der Induktor 20 mittels der Brücke 25 über beide Haltebereiche 19A, 19B erstreckt, wobei der vordere Wirkabschnitt 24A des Induktors 20 dem vorderen Haltebereich 19A zugeordnet ist und der hintere Wirkabschnitt 24B des Induktors 20 dem hinteren Haltebereich 19B zugeordnet ist. Die Wirkabschnitte 24A, 24B des Induktors 20 weisen eine Länge auf, die wenigstens 150 mm beträgt, so dass auch bei hohen Transportgeschwindigkeiten eine zuverlässige Erwärmung der Packungsmäntel 10 im Bereich der Flossennähte 15 sichergestellt ist. Die Breite des Spaltes S in Querrichtung Zs liegt vorzugsweise im Bereich zwischen 1 mm und 3 mm. Diese Werte beziehen sich auf eine Vorrichtung, die zur Verarbeitung eines oder mehrerer Packungsformate mit Füllvolumina im Bereich von etwa 80 ml bis etwa 2000 ml ausgelegt ist. Packungen mit derartigen Volumina weisen im Bereich der aseptischen Lebensmittelverpackungen heute in der Regel eine Materialstärke bzw. Laminatstärke im Bereich zwischen 0,1 mm und 1,0 mm auf.

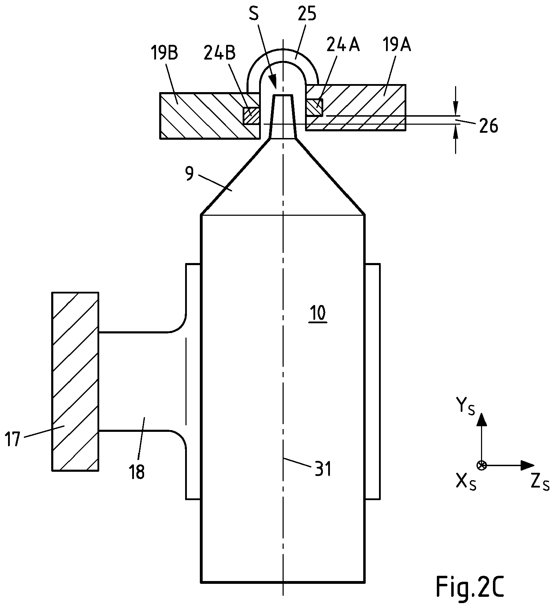

Fig. 2C zeigt die Vorrichtung aus Fig. 2A in einer geschnittenen Ansicht entlang der Ebene IIC-IIC aus Fig. 2A. Für diejenigen Bereiche der Vorrichtung 16, die bereits im Zusammenhang mit Fig. 2A oder Fig. 2B beschrieben wurden, werden auch in Fig. 2C entsprechende Bezugszeichen verwendet. In der geschnittenen Ansicht ist deutlich erkennbar, dass die Wirkabschnitte 24A, 24B des Induktors 20 zwar in bzw. an den Haltebereichen 19A, 19B gelagert sind, jedoch nicht vollständig von dem Material der Haltebereiche 19A, 19B umschlossen sind. Stattdessen liegen die Wirkabschnitte 24A, 24B des Induktors 20 an ihrer dem Spalt S zugewandten Seite frei. Weiterhin ist besonders deutlich ein Höhenversatz 26 erkennbar, der sich zwischen dem vorderen Haltebereich 19A und dem hinteren Haltebereich 19B und somit auch zwischen dem vorderen Wirkabschnitt 24A und dem hinteren Wirkabschnitt 24B des Induktors 20 einstellt. Der Höhenversatz 26 kann im Bereich zwischen 1 mm und 5 mm liegen. Schließlich ist eine Mittelebene 31 dargestellt, die hier senkrecht, also in Richtung der Y_{S}-Achse verläuft.

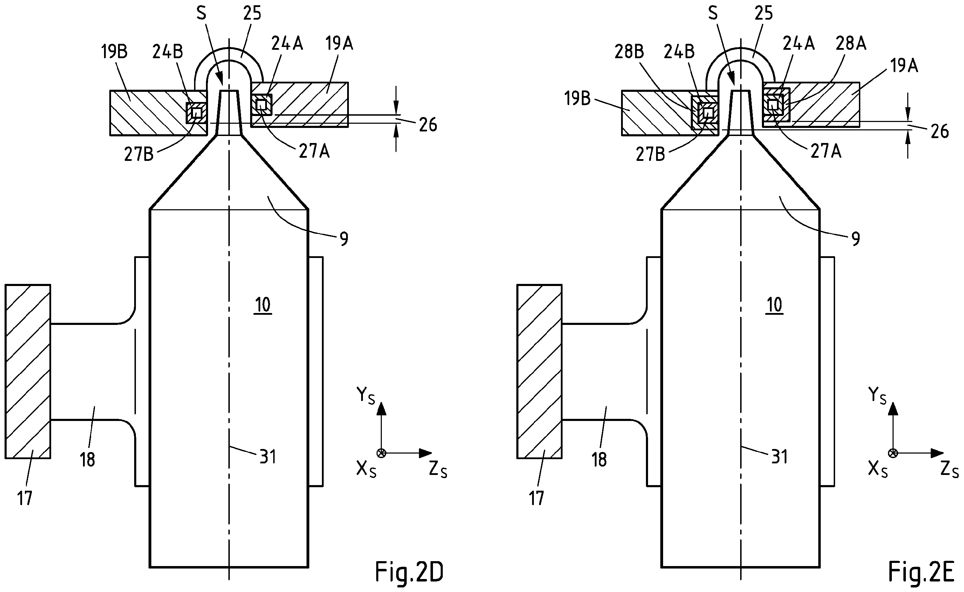

In Fig. 2D ist eine alternative Ausgestaltung zu Fig. 2C dargestellt. Für diejenigen Bereiche der Vorrichtung 16, die bereits im Zusammenhang mit Fig. 2A bis Fig. 2D beschrieben wurden, werden auch in Fig. 2D entsprechende Bezugszeichen verwendet. Ein Unterschied dieser alternativen Ausgestaltung liegt darin, dass die beiden Wirkabschnitte 24A, 24B des Induktors 20 als Hohlprofile ausgebildet sind und integrierte Kühlkanäle 27A, 27B aufweisen. Die Kühlkanäle 27A, 27B können von einer Kühlflüssigkeit, beispielsweise Wasser oder Öl durchströmt werden, um die Wirkabschnitte 24A, 24B des Induktors 20 zu kühlen.

Fig. 2E zeigt eine weitere alternative Ausgestaltung zu Fig. 2C. Für diejenigen Bereiche der Vorrichtung 16, die bereits im Zusammenhang mit Fig. 2A bis Fig. 2D beschrieben wurden, werden auch in Fig. 2E entsprechende Bezugszeichen verwendet. Ein Unterschied dieser alternativen Ausgestaltung liegt darin, dass die beiden Wirkabschnitte 24A, 24B des Induktors 20 von einem Konzentrator 28A, 28B umgeben sind. Der Konzentrator 28A, 28B konzentriert das elektromagnetische Feld auf die dem Spalt S zugewandte Seite der Wirkabschnitte 24A, 24B. Wie in Fig. 2D, sind auch in Fig. 2E die Wirkabschnitte 24A, 24B als Hohlprofile ausgebildet und weisen integrierte Kühlkanäle 27A, 27B auf. Die Kühlkanäle 27A, 27B können von einer Kühlflüssigkeit, beispielsweise Wasser oder Öl durchströmt werden, um die Wirkabschnitte 24A, 24B des Induktors 20 zu kühlen. Anders als in Fig. 2E dargestellt, können die Konzentratoren 28A, 28B jedoch auch mit massiven Wirkabschnitten 24A, 24B ohne Kühlkanäle 27A, 27B verwendet werden.

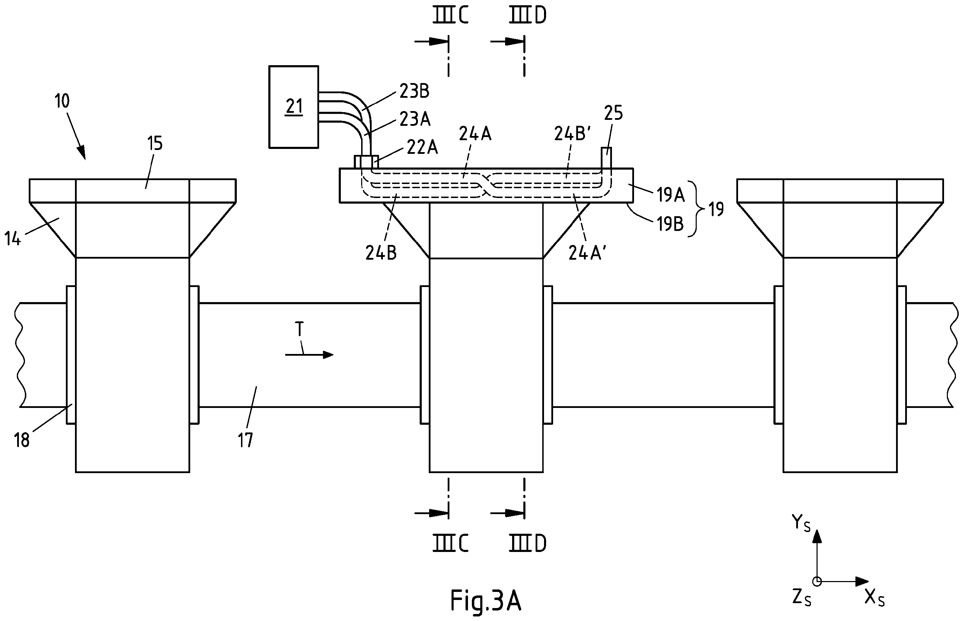

In Fig. 3A ist eine zweite Ausgestaltung einer erfindungsgemäßen Vorrichtung 16 in einer Vorderansicht dargestellt. Für diejenigen Bereiche der Vorrichtung 16, die bereits im Zusammenhang mit Fig. 2A bis Fig. 2E beschrieben wurden, werden auch in Fig. 3A entsprechende Bezugszeichen verwendet. Eine Besonderheit der zweiten Ausgestaltung liegt darin, dass nur ein Induktor 20 vorgesehen ist, der jedoch vier Wirkabschnitte 24A, 24A', 24B, 24B' umfasst. Die beiden vorderen Wirkabschnitte 24A, 24A' sind dem vorderen Haltebereich 19A zugeordnet und die beiden hinteren Wirkabschnitte 24B, 24B' sind dem hinteren Haltebereich 19B zugeordnet. Zwischen den beiden vorderen Wirkabschnitten 24A, 24A' ergibt sich ein Höhenversatz 26. Ebenso ist zwischen den beiden hinteren Wirkabschnitten 24B, 24B' ein Höhenversatz 26' vorgesehen. Der vordere Wirkabschnitte 24A' und der hintere Wirkabschnitt 24B' des Induktors 20 werden durch die U-förmige Brücke 25 miteinander verbunden. Der Induktor 20 ist über Anschlusselemente 22A, 22B und Kabel 23A, 23B mit der Einheit 21 verbunden.

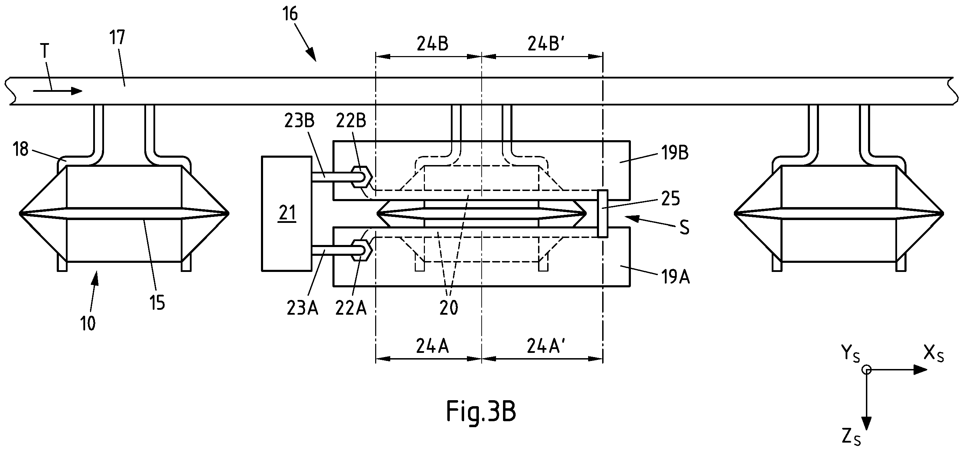

Fig. 3B zeigt die Vorrichtung aus Fig. 3A in einer Draufsicht. Für diejenigen Bereiche der Vorrichtung 16, die bereits im Zusammenhang mit Fig. 2A bis Fig. 3A beschrieben wurden, werden auch in Fig. 3B entsprechende Bezugszeichen verwendet. In der Draufsicht ist deutlich erkennbar, dass nur ein einziger Induktor 20 vorgesehen ist, der sich jedoch aufgrund der Brücke 25 über beide Haltebereiche 19A, 19B erstreckt, wobei die beiden vorderen Wirkabschnitte 24A, 24A' dem vorderen Haltebereich 19A zugeordnet sind und wobei die beiden hinteren Wirkabschnitte 24B, 24B' dem hinteren Haltebereich 19B zugeordnet sind.

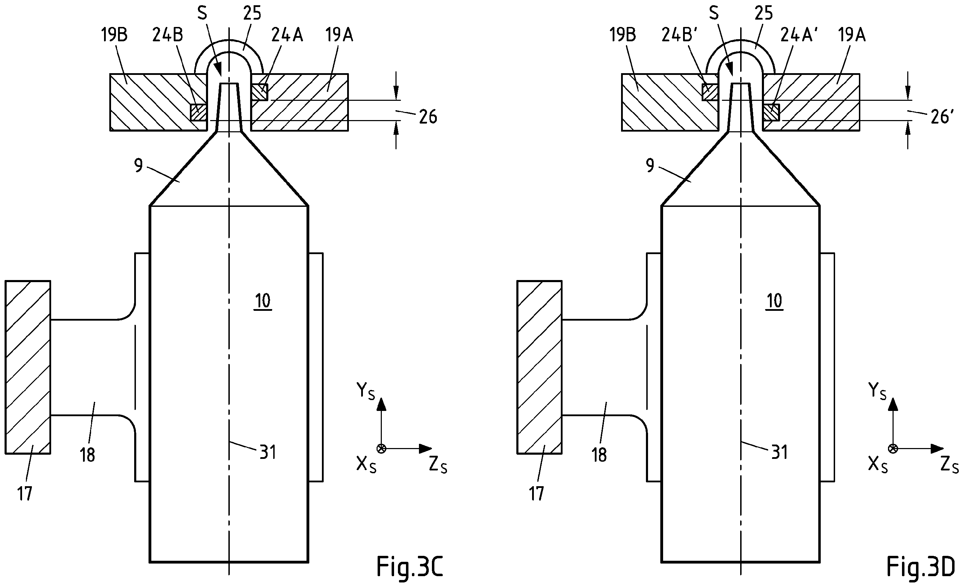

In Fig. 3C ist die Vorrichtung aus Fig. 3A in einer geschnittenen Ansicht entlang der Ebene IIIC-IIIC aus Fig. 3A dargestellt. Für diejenigen Bereiche der Vorrichtung 16, die bereits im Zusammenhang mit Fig. 2A bis Fig. 3B beschrieben wurden, werden auch in Fig. 3C entsprechende Bezugszeichen verwendet. In der geschnittenen Ansicht ist besonders deutlich der Höhenversatz 26 erkennbar, der sich zwischen dem vorderen Wirkabschnitt 24A und dem hinteren Wirkabschnitt 24B des Induktors 20 einstellt.

Der vordere Wirkabschnitt 24A ist in der in Fig. 3C dargestellten Schnittebene höher angeordnet als der hintere Wirkabschnitt 24B. Der Höhenversatz 26 kann im Bereich zwischen 1 mm und 5 mm liegen.

Fig. 3D zeigt die Vorrichtung aus Fig. 3A in einer geschnittenen Ansicht entlang der Ebene IIID-IIID aus Fig. 3A. Für diejenigen Bereiche der Vorrichtung 16, die bereits im Zusammenhang mit Fig. 2A bis Fig. 3C beschrieben wurden, werden auch in Fig. 3D entsprechende Bezugszeichen verwendet. In der geschnittenen Ansicht ist besonders deutlich der Höhenversatz 26' erkennbar, der sich zwischen dem vorderen Wirkabschnitt 24A' und dem hinteren Wirkabschnitt 24B' des Induktors 20 einstellt. Der vordere Wirkabschnitt 24A' ist in der in Fig. 3D gezeigten Schnittebene tiefer angeordnet als der hintere Wirkabschnitt 24B'. Der Höhenversatz 26' kann im Bereich zwischen 1 mm und 5 mm liegen.

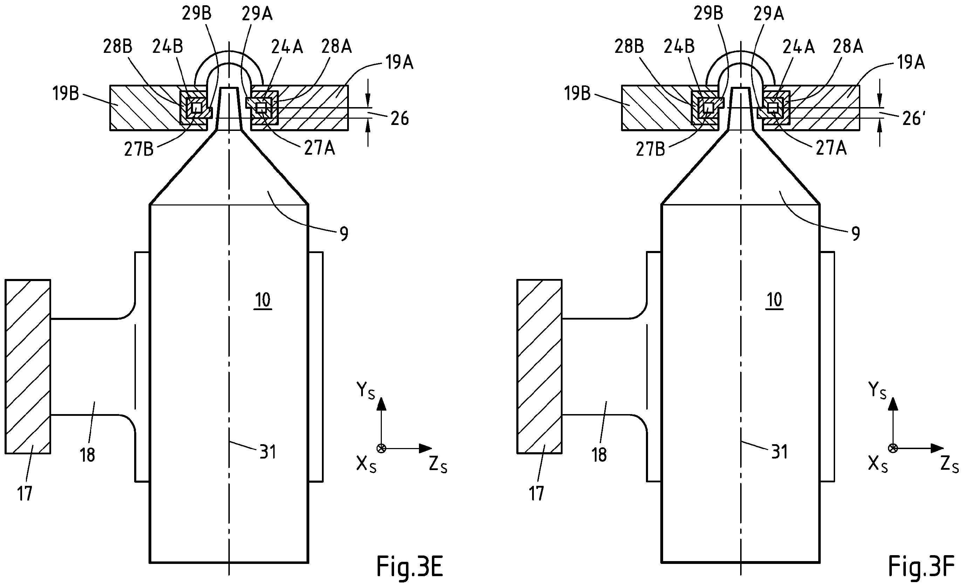

In Fig. 3E/3F sind alternative Ausgestaltungen zu Fig. 3C/3D dargestellt, wobei Fig. 3E der Ebene IIID-IIID aus Fig. 3A entspricht und wobei Fig. 3F der Ebene IIIE-IIIE aus Fig. 3A entspricht. Für diejenigen Bereiche der Vorrichtung 16, die bereits im Zusammenhang mit Fig. 2A bis Fig. 3D beschrieben wurden, werden auch in Fig. 3E/3F entsprechende Bezugszeichen verwendet. Ein Unterschied dieser alternativen Ausgestaltung liegt wiederum darin, dass die beiden Wirkabschnitte 24A, 24B des Induktors 20 als Hohlprofile ausgebildet sind und integrierte Kühlkanäle 27A, 27B aufweisen. Die Kühlkanäle 27A, 27B können von einer Kühlflüssigkeit, beispielsweise Wasser oder Öl durchströmt werden, um die Wirkabschnitte 24A, 24B des Induktors 20 zu kühlen. Zudem sind die beiden Wirkabschnitte 24A, 24B des Induktors 20 von einem Konzentrator 28A, 28B umgeben. Weiterhin weisen beide Wirkabschnitte 24A, 24B des Induktors 20 einen Vorsprung 29A, 29B auf, der den Stromfluss und somit das elektromagnetische Feld konzentrieren soll. Zwischen dem Vorsprung 29A des vorderen Wirkabschnitts 24A und dem Vorsprung 29B des hinteren Wirkabschnitts stellt sich wiederum ein Höhenversatz 26, 26' ein. Der Höhenversatz 26, 26' kann im Bereich zwischen 1 mm und 5 mm liegen. Der vordere Vorsprung 29A ist in der in Fig. 3E dargestellten Schnittebene höher angeordnet als der hintere Vorsprung 29B; in der in Fig. 3F dargestellten Schnittebene ist der vordere Vorsprung 29A hingegen tiefer angeordnet als der hintere Vorsprung 29B. Dies kann beispielsweise dadurch erreicht werden, dass sich die Lage der Vorsprünge 29A, 29B im Verlauf der Länge der beiden Wirkabschnitte 24A, 24B des Induktors 20 ändert. Die Vorsprünge 29A, 29B können neben der dargestellten Profilform mit rechteckigem Querschnitt auch Profilformen mit anderen Querschnitten oder Teilquerschnitten aufweisen, beispielsweise polygone, runde oder ovale Querschnitte oder Teilquerschnitte.

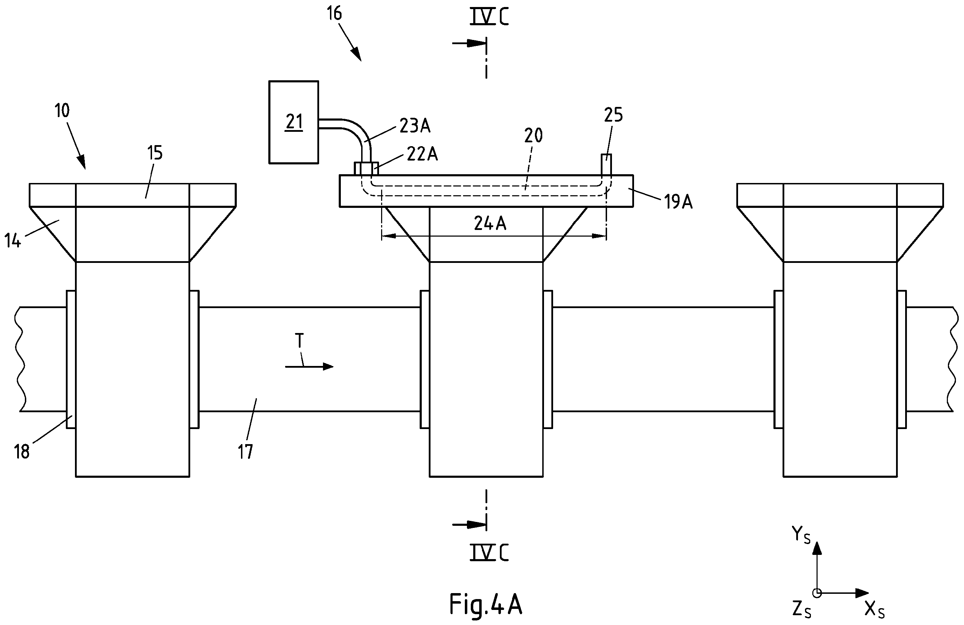

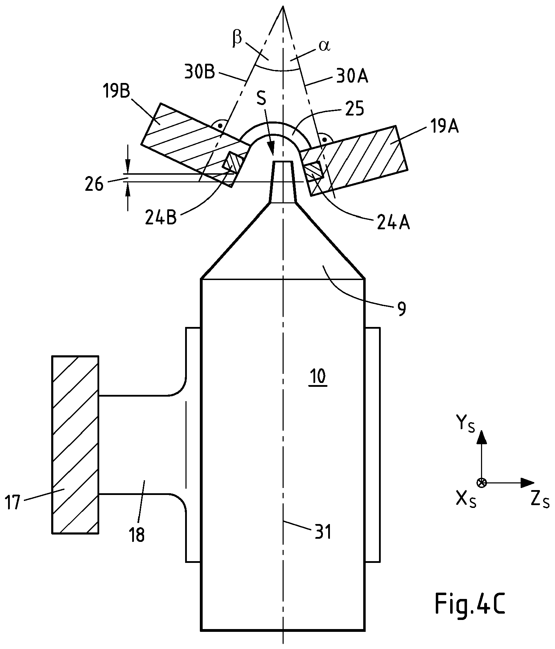

In Fig. 4A ist eine dritte Ausgestaltung einer erfindungsgemäßen Vorrichtung 16 in einer Vorderansicht dargestellt. Für diejenigen Bereiche der Vorrichtung 16, die bereits im Zusammenhang mit Fig. 2A bis Fig. 3F beschrieben wurden, werden auch in Fig. 4A entsprechende Bezugszeichen verwendet. Eine Besonderheit der dritten Ausgestaltung liegt darin, dass der Höhenversatz 26 durch eine Schrägstellung der beiden Haltebereiche 19A, 19B und der ihnen zugeordneten Wirkabschnitte 24A, 24B des Induktors 20 erreicht wird. Dies wird im Zusammenhang mit Fig. 4C näher erläutert.

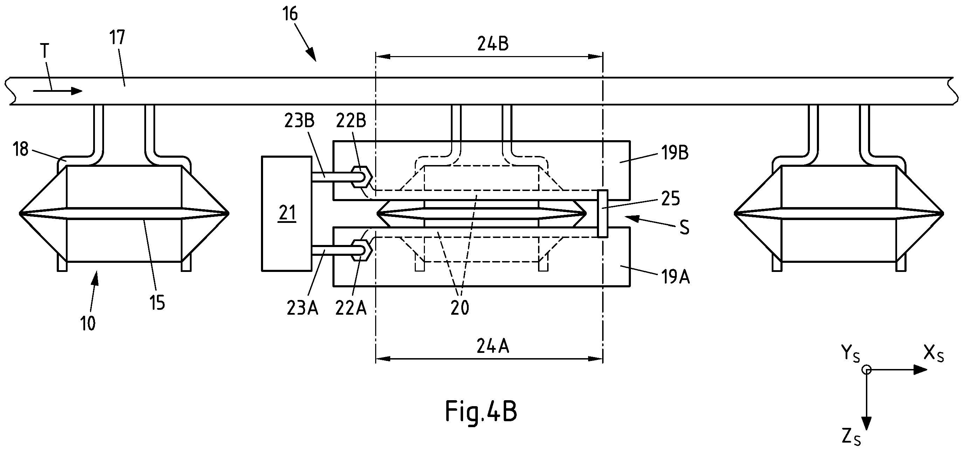

Fig. 4B zeigt die Vorrichtung 16 aus Fig. 4A in einer Draufsicht. Für diejenigen Bereiche der Vorrichtung 16, die bereits im Zusammenhang mit Fig. 2A bis Fig. 4A beschrieben wurden, werden auch in Fig. 4B entsprechende Bezugszeichen verwendet. Fig. 4B entspricht weitgehend Fig. 2B, da die Schrägstellung der beiden Haltebereiche 19A, 19B und der ihnen zugeordneten Wirkabschnitte 24A, 24B des Induktors 20 in der Draufsicht nicht erkennbar ist. Auf die Schrägstellung wird daher im Zusammenhang mit Fig. 4C eingegangen.

In Fig. 4C ist die Vorrichtung 16 aus Fig. 4A in einer geschnittenen Ansicht entlang der Ebene IVC-IVC aus Fig. 4A dargestellt. Für diejenigen Bereiche der Vorrichtung 16, die bereits im Zusammenhang mit Fig. 2A bis Fig. 4B beschrieben wurden, werden auch in Fig. 4C entsprechende Bezugszeichen verwendet. In der geschnittenen Ansicht ist die geneigte Stellung der Haltebereiche 19A, 19B und der darin gelagerten Wirkabschnitte 24A, 24B des Induktors 20 erkennbar. Durch die Haltebereiche 19A, 19B verlaufen Achsen 30A, 30B, die rechtwinklig zu den Oberflächen der Haltebereiche 19A, 19B angeordnet sind. Zentral durch den Packungsmantel 10 verläuft zudem die Mittelebene 31, die durch die Längsrichtung Xs und die Hochrichtung Ys des Spaltes S aufgespannt wird, und auf der die Querrichtung Zs des Spaltes senkrecht steht. Zwischen der vorderen Achse 30A und der Mittelebene 31 entsteht ein Winkel α und zwischen der hinteren Achse 30B und der Mittelebene 31 entsteht ein Winkel β. Indem beide Winkel α, β unterschiedliche Werte einnehmen, wird ein Höhenversatz 26 zwischen beiden Wirkabschnitten 24A, 24B des Induktors 20 erreicht. Der Höhenversatz 26 kann im Bereich zwischen 1 mm und 5 mm liegen.

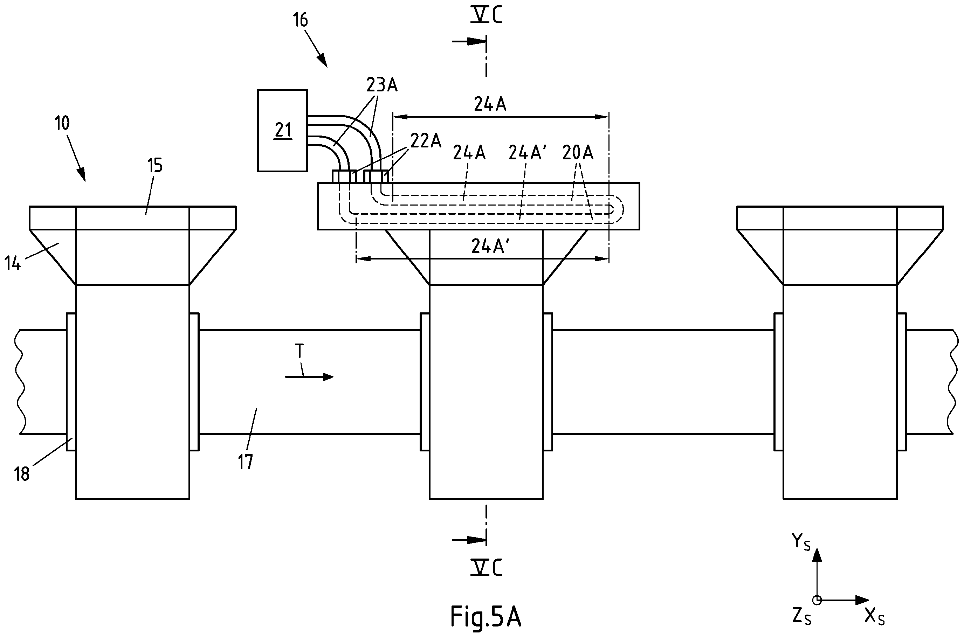

In Fig. 5A ist eine vierte Ausgestaltung einer erfindungsgemäßen Vorrichtung 16 in einer Vorderansicht dargestellt. Für diejenigen Bereiche der Vorrichtung 16, die bereits im Zusammenhang mit Fig. 2A bis Fig. 4C beschrieben wurden, werden auch in Fig. 5A entsprechende Bezugszeichen verwendet. Bei der vierten Ausgestaltung sind zwei separate Induktoren 20A, 20B vorhanden, wobei der erste Induktor 20A dem vorderen Haltebereich 19A zugeordnet ist und wobei der zweite Induktor 20B dem hinteren Haltebereich 19B zugeordnet ist. Beide Induktoren 20A, 20B sind über Anschlusselemente 22A, 22B und Kabel 23A, 23B an die Einheit 21 angeschlossen. Jeder der Induktoren 20A, 20B weist zwei Wirkabschnitte 24A, 24A', 24B, 24B' auf. Die Wirkabschnitte 24A, 24B sind oberhalb der Wirkabschnitte 24A', 24B' angeordnet und etwas kürzer als diese. Die Wirkabschnitte 24A, 24B können aber - anders als in Fig. 5A dargestellt - auch gleich lang oder länger als die Wirkabschnitte 24A', 24B' gestaltet sein.

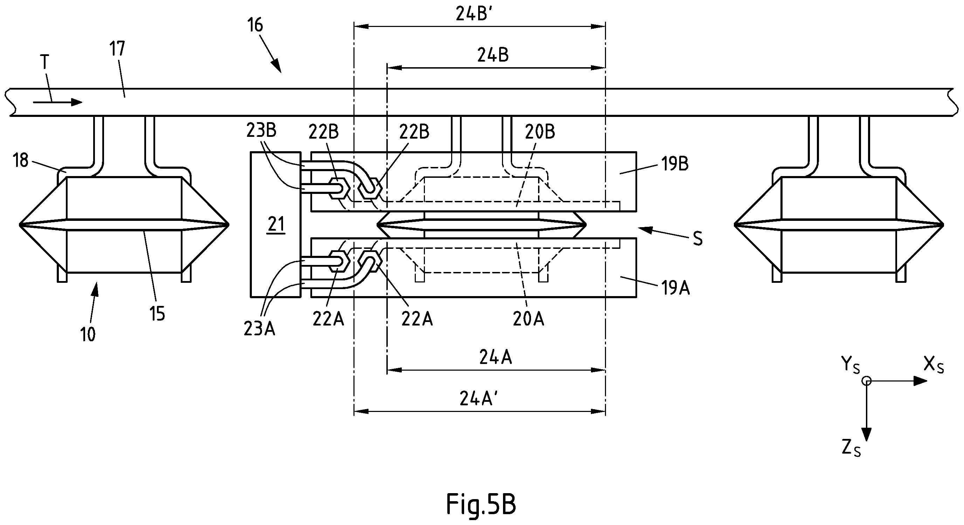

Fig. 5B zeigt die Vorrichtung aus Fig. 5A in einer Draufsicht. Für diejenigen Bereiche der Vorrichtung 16, die bereits im Zusammenhang mit Fig. 2A bis Fig. 5A beschrieben wurden, werden auch in Fig. 5B entsprechende Bezugszeichen verwendet. In der Draufsicht ist deutlich erkennbar, dass der Induktor 20A und seine beiden übereinander angeordneten Wirkabschnitte 24A, 24A' dem vorderen Haltebereich 19A zugeordnet sind und dass der Induktor 20B und seine beiden übereinander angeordneten Wirkabschnitte 24B, 24B' dem hinteren Haltebereich 19B zugeordnet sind.

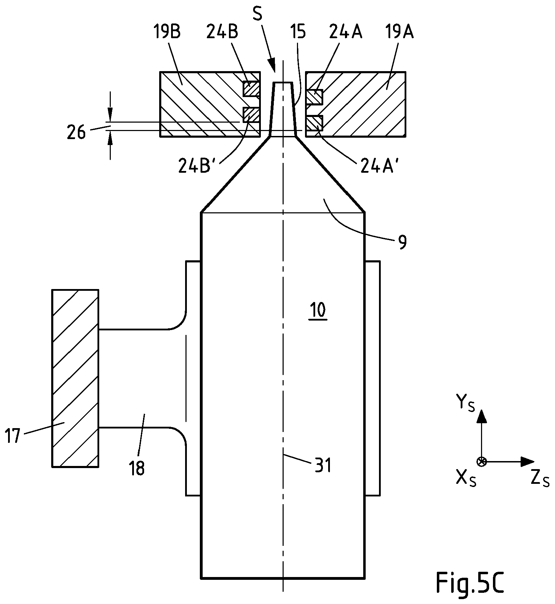

In Fig. 5C ist schließlich die die Vorrichtung 16 aus Fig. 5A in einer geschnittenen Ansicht entlang der Ebene VC-VC aus Fig. 5A dargestellt. Für diejenigen Bereiche der Vorrichtung 16, die bereits im Zusammenhang mit Fig. 2A bis Fig. 5B beschrieben wurden, werden auch in Fig. 5C entsprechende Bezugszeichen verwendet. In der geschnittenen Ansicht ist besonders deutlich erkennbar, dass zwischen den Wirkbereichen 24A, 24A' des vorderen Induktors 20A und den Wirkbereichen 24B, 24B' des hinteren Induktors 20B ein Höhenversatz 26 vorhanden ist. Der Höhenversatz 26 kann im Bereich zwischen 1 mm und 5 mm liegen. Zudem ist klar erkennbar, dass die Wirkabschnitte 24A, 24B höher angeordnet sind als die Wirkabschnitte 24A', 24B'. Anders als in Fig. 5C dargestellt ist, kann auch vorgesehen sein, dass nur auf einer Seite des Spaltes S, also nur in einer der beiden Haltebereiche 19A, 19B ein Induktor 20 vorgesehen ist, während der andere Haltebereich 19A, 19B keinen Induktor 20 aufweist und daher lediglich als mechanische Führung für die Packungsmäntel 10 dient.

Die Merkmale aller vier zuvor dargestellten und beschriebenen Ausgestaltungen der Vorrichtung können miteinander kombiniert werden. Insbesondere kann jede der Ausgestaltungen entweder einen Induktor 20 aufweisen, der sich mittels einer Brücke 25 über beide Haltebereiche 19A, 19B erstreckt oder alternativ zwei separate Induktoren 20A, 20B aufweisen, die jeweils nur einem der beiden Haltebereiche 19A, 19B zugeordnet sind. Zudem sind die unterschiedlichen Methoden zur Erreichung eines Höhenversatzes 26 miteinander kombinierbar. Schließlich können bei jeder Ausgestaltung Kühlkanäle 27 und/oder Konzentratoren 28 und/oder Vorsprünge 29 vorgesehen sein, sofern dies gewünscht oder erforderlich ist.

### Bezugszeichenliste:

- 1:: Zuschnitt
- 2:: Faltlinie
- 3, 4:: Seitenflächen
- 5:: vordere Fläche
- 6:: hintere Fläche
- 7:: Siegelfläche
- 8:: Bodenfläche
- 9:: Giebelfläche
- 10:: Packungsmantel
- 11:: Längsnaht
- 12:: Rechtecksfläche
- 13:: Dreiecksfläche
- 14:: Ohr
- 15:: Flossennaht
- 16:: Vorrichtung
- 17:: Transportband
- 18:: Zelle
- 19:: Halteeinheit
- 19A, 19B:: Haltebereich
- 20, 20A, 20B:: Induktor
- 21:: Einheit zur Erzeugung eines Wechselstroms
- 22, 22A, 22B:: Anschlusselement
- 23, 23A, 23B:: Kabel
- 24, 24A, 24A', 24B, 24B':: Wirkabschnitt (des Induktors)
- 25:: Brücke
- 26, 26', 26A, 26B:: Höhenversatz
- 27, 27A, 27B:: Kühlkanal
- 28, 28A, 28B:: Konzentrator
- 29A, 29B:: Vorsprung
- 30A, 30B:: Achse
- 31:: Mittelebene (des Packungsmantels)

- S:: Spalt
- T:: Transportrichtung
- X_{S}:: Längsrichtung (des Spaltes S)
- Y_{S}:: Hochrichtung (des Spaltes S)
- Z_{S}:: Querrichtung (des Spaltes S)
- α:: Winkel
- β:: Winkel

## Patentansprüche

1. Vorrichtung zum induktiven Erwärmen von Packungsmänteln (10), umfassend:
- wenigstens eine Einheit (21) zur Erzeugung eines Wechselstroms,
- wenigstens einen Induktor (20, 20A, 20B) mit wenigstens zwei Wirkabschnitten (24A, 24A', 24B, 24B'), und
- eine Halteeinheit (19) mit einem vorderen Haltebereich (19A) und einem hinteren Haltebereich (19B) zur Lagerung des Induktors (20, 20A, 20B),
- wobei der Induktor (20, 20A, 20B) mit der Einheit (21) zur Erzeugung eines Wechselstroms verbunden ist, und
- wobei die Haltebereiche (19A, 19B) derart angeordnet sind, dass zwischen dem vorderen Haltebereich (19A) und dem hinteren Haltebereich (19B) ein Spalt (S) entsteht, dessen Längsrichtung (Xs) der Transportrichtung (T) der Packungsmäntel (10) entspricht, wobei die Wirkabschnitte (24A, 24A', 24B, 24B') des Induktors (20, 20A, 20B) bezogen auf eine in dem Spalt (S) liegende Mittelebene (31) wenigstens abschnittsweise asymmetrisch zueinander angeordnet sind.

2. Vorrichtung nach Anspruch 1,
**dadurch gekennzeichnet, dass**
dem vorderen Haltebereich (19A) und dem hinteren Haltebereich (19B) jeweils wenigstens ein Wirkabschnitt (24A, 24A', 24B, 24B') des Induktors (20, 20A, 20B) zugeordnet ist.

3. Vorrichtung nach Anspruch 2,
**gekennzeichnet durch**
einen Höhenversatz (26, 26', 26A, 26B), der zwischen dem vorderen Wirkabschnitt (24A, 24A') und dem hinteren Wirkabschnitt (24B, 24B') des Induktors (20, 20A, 20B) vorgesehen ist.

4. Vorrichtung nach Anspruch 3,
**dadurch gekennzeichnet, dass**
der Höhenversatz (26, 26', 26A, 26B) im Bereich zwischen 0,5 mm bis 10 mm, insbesondere im Bereich zwischen 2 mm bis 4 mm liegt.

5. Vorrichtung nach einem der Ansprüche 1 bis 4,
**dadurch gekennzeichnet, dass**
die Wirkabschnitte (24A, 24A', 24B, 24B') des Induktors (20, 20A, 20B) linear ausgebildet sind und parallel zur Transportrichtung (T) der Packungsmäntel (10) verlaufen.

6. Vorrichtung nach einem der Ansprüche 1 bis 5,
**dadurch gekennzeichnet, dass**
wenigstens ein Induktor (20, 20A, 20B) eine Brücke (25) zur Überbrückung des Spaltes (S) aufweist.

7. Vorrichtung nach einem der Ansprüche 1 bis 6,
**dadurch gekennzeichnet, dass**
wenigstens ein Wirkabschnitt (24A, 24A', 24B, 24B') des Induktors (20, 20A, 20B) als Hohlprofil mit einem integrierten Kühlkanal (27, 27A, 27B) ausgebildet ist.

8. Vorrichtung nach einem der Ansprüche 1 bis 7,
**dadurch gekennzeichnet, dass**
wenigstens ein Wirkabschnitt (24A, 24A', 24B, 24B') des Induktors (20, 20A, 20B) von einem Konzentrator (28, 28A, 28B) umgeben ist.

9. Vorrichtung nach einem der Ansprüche 1 bis 8,
**dadurch gekennzeichnet, dass**
wenigstens ein Wirkabschnitt (24A, 24A', 24B, 24B') des Induktors (20, 20A, 20B) einen Vorsprung (29A, 29B) aufweist.

10. Vorrichtung nach einem der Ansprüche 1 bis 9,
**dadurch gekennzeichnet, dass**
wenigstens ein Haltebereich (19A, 19B) gegenüber der Mittelebene (31) um einen Winkel (α, β) im Bereich zwischen 5° bis 30°, insbesondere zwischen 10° bis 25° geneigt ist.

11. Vorrichtung nach einem der Ansprüche 1 bis 10,
**gekennzeichnet durch**
wenigstens zwei Induktoren (20A, 20B), wobei jeder Induktor (20A, 20B) mit einer Einheit (21) zur Erzeugung eines Wechselstroms verbunden ist.

12. Vorrichtung nach einem der Ansprüche 1 bis 11,
**gekennzeichnet durch**
ein Transportband (17) mit Zellen (18) zur Aufnahme der Packungsmäntel (10).

13. Vorrichtung nach einem der Ansprüche 1 bis 12,
**gekennzeichnet durch**
eine Führungseinrichtung zur Konditionierung der Giebelgeometrie der Packungsmäntel (10).

14. Verfahren zum induktiven Erwärmen von Packungsmänteln (10), umfassend die folgenden Schritte:
a) Bereitstellen einer Vorrichtung zum induktiven Erwärmen von Packungsmänteln (10) mit wenigstens einem Induktor (20, 20A, 20B) mit wenigstens zwei Wirkabschnitten (24A, 24A', 24B, 24B');
b) Bereitstellen von Packungsmänteln (10) mit einem elektrisch leitfähigen Bereich; und
c) Erzeugen eines elektromagnetischen Wechselfeldes; wobei das elektromagnetische Wechselfeld durch Wirkabschnitte (24A, 24A', 24B, 24B') des Induktors (20, 20A, 20B) erzeugt wird, die bezogen auf eine in dem Spalt (S) liegende Mittelebene (31) asymmetrisch zueinander angeordnet sind.

15. Verfahren nach Anspruch 14,
**dadurch gekennzeichnet, dass**
in Schritt a) eine Vorrichtung (16) nach einem der Ansprüche 1 bis 13 bereitgestellt wird.

16. Verfahren nach Anspruch 14 oder 15,
**dadurch gekennzeichnet, dass**
zur Erzeugung des elektromagnetischen Wechselfeldes eine Gleichspannung mit einer Spannung im Bereich zwischen 20 V und 1000 V, insbesondere zwischen 120 V und 280 V eingesetzt wird.

17. Verfahren nach einem der Ansprüche 14 bis 16,
**dadurch gekennzeichnet, dass**
ein elektromagnetisches Wechselfeld mit einer Frequenz im Bereich zwischen 30 kHz und 2000 kHz, insbesondere zwischen 100 kHz und 500 kHz, bevorzugt zwischen 100 kHz und 250 kHz erzeugt wird.

18. Verfahren nach einem der Ansprüche 14 bis 17,
**gekennzeichnet durch**
den folgenden Schritt:
d) Bewegen der Packungsmäntel (10) relativ zu der Vorrichtung (16).

## Claims

1. Device for inductively heating packaging sleeves (10), comprising:
- at least one unit (21) for generating an alternating current,
- at least one inductor (20, 20A, 20B) having at least two operating sections (24A, 24A', 24B, 24B'), and
- a holding unit (19) having a front holding region (19A) and a rear holding region (19B) for supporting the inductor (20, 20A, 20B),
- wherein the inductor (20, 20A, 20B) is connected to the unit (21) for generating an alternating current, and
- wherein the holding regions (19A, 19B) are arranged such that between the front holding region (19A) and the rear holding region (19B) a gap (S) is formed, whose longitudinal direction (Xₛ) corresponds to the transport direction (T) of the packaging sleeves (10), whereby
the operating sections (24A, 24A', 24B, 24B') of the inductor (20, 20A, 20B) are arranged at least in sections asymmetrically to one another with respect to a medial plane (31) located in the gap (S).

2. Device according to Claim 1,
**characterised in that**
at least one operating section (24A, 24A', 24B, 24B') of the inductor (20, 20A, 20B) is assigned to the front holding region (19A) and the rear holding region (19B).

3. Device according to Claim 2,
**characterised by**
a height offset (26, 26', 26A, 26B) provided between the front operating section (24A, 24A') and the rear operating section (24B, 24B ') of the inductor (20, 20A, 20B).

4. Device according to Claim 3,
**characterised in that**
the height offset (26, 26', 26A, 26B) is in the range between 0.5 mm to 10 mm, in particular in the range between 2 mm to 4 mm.

5. Device according to any one of Claims 1 to 4,
**characterised in that**
the operating sections (24A, 24A', 24B, 24B') of the inductor (20, 20A, 20B) are designed to be linear and extend parallel to the transport direction (T) of the packaging sleeves (10).

6. Device according to any one of Claims 1 to 5,
**characterised in that**
at least one inductor (20, 20A, 20B) has a bridge (25) for bridging the gap (S).

7. Device according to any one of Claims 1 to 6,
**characterised in that**
at least one operating section (24A, 24A', 24B, 24B') of the inductor (20, 20A, 20B) is designed as a hollow section with an integrated cooling channel (27, 27A, 27B).

8. Device according to any one of Claims 1 to 7,
**characterised in that**
at least one operating section (24A, 24A', 24B, 24B') of the inductor (20, 20A, 20B) is surrounded by a concentrator (28, 28A, 28B).

9. Device according to any one of Claims 1 to 8,
**characterised in that**
at least one operating section (24A, 24A', 24B, 24B') of the inductor (20, 20A, 20B) has a projection (29A, 29B).

10. Device according to any one of Claims 1 to 9,
**characterised in that**
at least one holding region (19A, 19B) is inclined relative to the medial plane (31) at an angle (α, β) in the range between 5° to 30°, in particular between 10° to 25°.

11. Device according to any one of Claims 1 to 10,
**characterised by**
at least two inductors (20A, 20B), whereby each inductor (20A, 20B) is connected to a unit (21) for generating an alternating current.

12. Device according to any one of Claims 1 to 11,
**characterised by**
a conveyor belt (17) with cells (18) for receiving the packaging sleeves (10).

13. Device according to any one of Claims 1 to 12,
**characterised by**
a guidance device for conditioning the gable geometry of the packaging sleeves (10).

14. Method for inductively heating packaging sleeves (10), comprising the following steps:
a) providing a device for inductively heating packaging sleeves (10) having at least one inductor (20, 20A, 20B) with at least two operating sections (24A, 24A', 24B, 24B');
b) providing packaging sleeves (10) having an electrically conductive region; and
c) generating an alternating electromagnetic field; whereby
the alternating electromagnetic field is generated by operating sections (24A, 24A', 24B, 24B') of the inductor (20, 20A, 20B), which are arranged asymmetrically to each other with respect to a medial plane (31) located in the gap (S).

15. Method according to Claim 14,
**characterised in that**
in step a) a device (16) is provided according to any one of Claims 1 to 13.

16. Method according to Claim 14 or 15,
**characterised in that**
for generating the electromagnetic alternating field, a DC voltage with a voltage in the range between 20 V and 1000 V, in particular between 120 V and 280 V is used.

17. Method according to any one of Claims 14 to 16,
**characterised in that**
an alternating electromagnetic field is generated having a frequency in the range between 30 kHz and 2000 kHz, in particular between 100 kHz and 500 kHz, preferably between 100 kHz and 250 kHz.

18. Method according to any one of Claims 14 to 17,
**characterised by**
the following step:
d) Moving the packaging sleeves (10) relative to the device (16).

## Revendications

1. Dispositif de chauffage inductif d'enveloppes d'emballage (10), comprenant :
- au moins une unité (21) destinée à générer un courant alternatif,
- au moins une bobine d'induction (20, 20A, 20B) pourvue d'au moins deux portions actives (24A, 24A', 24B, 24B'), et
- une unité de maintien (19) pourvue d'une zone de maintien avant (19A) et d'une zone de maintien arrière (19B) servant à loger la bobine d'induction (20, 20A, 20B),
- la bobine d'induction (20, 20A, 20B) étant reliée à l'unité (21) destinée à générer un courant alternatif, et
- les zones de maintien (19A, 19B) étant disposées de telle sorte qu'entre la zone de maintien avant (19A) et la zone de maintien arrière (19B) est formé un entrefer (S) dont la direction longitudinale (Xs) correspond à la direction de transport (T) de l'enveloppe d'emballage (10),
les portions actives (24A, 24A', 24B, 24B') de la bobine d'induction (20, 20A, 20B) étant, au moins dans certaines portions, disposées de manière asymétrique les unes par rapport aux autres par rapport à un plan central (31) qui se trouve dans l'entrefer (S).

2. Dispositif selon la revendication 1, **caractérisé en ce qu'**au moins une portion active (24A, 24A', 24B, 24B') de la bobine d'induction (20, 20A, 20B) est respectivement associée à la zone de maintien avant (19A) et à la zone de maintien arrière (19B).

3. Dispositif selon la revendication 2, **caractérisé par** un décalage en hauteur (26, 26', 26A, 26B) qui se trouve entre la portion active avant (24A, 24A') et la portion active arrière (24B, 24B') de la bobine d'induction (20, 20A, 20B).

4. Dispositif selon la revendication 3, **caractérisé en ce que** le décalage en hauteur (26, 26', 26A, 26B) est compris dans la plage de 0,5 mm à 10 mm, notamment dans la plage de 2 mm à 4 mm.

5. Dispositif selon l'une des revendications 1 à 4, **caractérisé en ce que** les portions actives (24A, 24A', 24B, 24B') de la bobine d'induction (20, 20A, 20B) sont de configuration linéaire et s'étendent parallèlement à la direction de transport (T) de l'enveloppe d'emballage (10).

6. Dispositif selon l'une des revendications 1 à 5, **caractérisé en ce qu'**au moins une bobine d'induction (20, 20A, 20B) possède un pont (25) servant à ponter l'entrefer (S).

7. Dispositif selon l'une des revendications 1 à 6, **caractérisé en ce qu'**au moins une portion active (24A, 24A', 24B, 24B') de la bobine d'induction (20, 20A, 20B) est réalisée sous la forme d'un profilé creux avec un canal de refroidissement (27, 27A, 27B) intégré.

8. Dispositif selon l'une des revendications 1 à 7, **caractérisé en ce qu'**au moins une portion active (24A, 24A', 24B, 24B') de la bobine d'induction (20, 20A, 20B) est entourée par un concentrateur (28, 28A, 28B).

9. Dispositif selon l'une des revendications 1 à 8, **caractérisé en ce qu'**au moins une portion active (24A, 24A', 24B, 24B') de la bobine d'induction (20, 20A, 20B) possède une partie saillante (29A, 29B).

10. Dispositif selon l'une des revendications 1 à 9, **caractérisé en ce qu'**au moins une zone de maintien (19A, 19B) est inclinée par rapport au plan central (31) selon un angle (α, β) dans la plage de 5° à 30°, notamment de 10° à 25°.

11. Dispositif selon l'une des revendications 1 à 10, **caractérisé par** au moins deux bobines d'induction (20A, 20B), chaque bobine d'induction (20A, 20B) étant reliée à une unité (21) servant à générer un courant alternatif.

12. Dispositif selon l'une des revendications 1 à 11, **caractérisé par** une bande transporteuse (17) comprenant des cellules (18) destinées à accueillir l'enveloppe d'emballage (10).

13. Dispositif selon l'une des revendications 1 à 12, **caractérisé par** un appareil de guidage destiné à conditionner la géométrie de façade de l'enveloppe d'emballage (10).

14. Procédé de chauffage inductif d'enveloppes d'emballage (10), comprenant les étapes suivantes :
a) fourniture d'un dispositif de chauffage inductif d'enveloppes d'emballage (10) comprenant au moins une bobine d'induction (20, 20A, 20B) pourvue d'au moins deux portions actives (24A, 24A', 24B, 24B') ;
b) fourniture d'enveloppes d'emballage (10) ayant une zone électriquement conductrice ; et
c) génération d'un champ alternatif électromagnétique ;
le champ alternatif électromagnétique étant généré par des portions actives (24A, 24A', 24B, 24B') de la bobine d'induction (20, 20A, 20B), lesquelles sont disposées de manière asymétrique les unes par rapport aux autres par rapport à un plan central (31) qui se trouve dans l'entrefer (S).

15. Procédé selon la revendication 14, **caractérisé en ce que** dans l'étape a) est fourni un dispositif selon l'une des revendications 1 à 13.

16. Procédé selon la revendication 14 ou 15, **caractérisé en ce qu'**une tension continue ayant une tension dans la plage entre 20 V et 1000 V, notamment entre 120 V et 280 V, est utilisée pour générer le champ alternatif électromagnétique.

17. Procédé selon l'une des revendications 14 à 16, **caractérisé en ce que** le champ alternatif électromagnétique est généré avec une fréquence dans la plage entre 30 kHz et 2000 kHz, notamment entre 100 kHz et 500 kHz, de préférence entre 100 kHz et 250 kHz.

18. Procédé selon l'une des revendications 14 à 17, **caractérisé par** l'étape suivante :
d) déplacement de l'enveloppe d'emballage (10) par rapport au dispositif (16).
